(19) Europäisches Patentamt
European Patent Office
Office européen des brevets

(11) **EP 4 198 836 B1**

(12) # EUROPEAN PATENT SPECIFICATION

(45) Date of publication and mention
of the grant of the patent:
**18.03.2026 Bulletin 2026/12**

(51) International Patent Classification (IPC):
**G06N 5/045** *(2023.01)* **G06N 3/04** *(2023.01)*

(21) Application number: **22212969.4**

(52) Cooperative Patent Classification (CPC):
**G06N 5/045; G06N 3/04**

(22) Date of filing: **13.12.2022**

(54) **METHOD AND SYSTEM FOR LOCAL EXPLAINABILITY OF NEURAL NETWORK PREDICTION FIELD**

VERFAHREN UND SYSTEM ZUR LOKALEN ERKLÄRBARKEIT EINES NEURONALEN NETZWERKVORHERSAGEFELDES

PROCÉDÉ ET SYSTÈME D'EXPLICATION LOCALE DE CHAMP DE PRÉDICTION DE RÉSEAU NEURONAL

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **17.12.2021 US 202117555245**

(43) Date of publication of application:
**21.06.2023 Bulletin 2023/25**

(73) Proprietor: **SAP SE**
**69190 Walldorf (DE)**

(72) Inventors:
• **Farooqi, Waqas Ahmad**
**69190 Walldorf (DE)**
• **Schmidt, Eckehard**
**69190 Walldorf (DE)**
• **Grill, Jonas**
**69190 Walldorf (DE)**

(74) Representative: **Müller-Boré & Partner**
**Patentanwälte PartG mbB**
**Friedenheimer Brücke 21**
**80639 München (DE)**

(56) References cited:
EP-B1- 3 271 863 US-A1- 2020 257 737
US-A1- 2021 174 244

• HUBER TOBIAS ET AL: "Enhancing Explainability of Deep Reinforcement Learning Through Selective Layer-Wise Relevance Propagation", 24 August 2019, ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 188 - 202, ISBN: 978-3-319-10403-4, XP047520240
• SEBASTIAN BACH ET AL: "On Pixel-Wise Explanations for Non-Linear Classifier Decisions by Layer-Wise Relevance Propagation", PLOS ONE, vol. 10, no. 7, 10 July 2015 (2015-07-10), US, pages 1 - 46, XP055228791, ISSN: 1932-6203, DOI: 10.1371/journal.pone.0130140
• HOLECEK MARTIN ED - LIU CHENG-LIN ET AL: "Learning from similarity and information extraction from structured documents", INTERNATIONAL JOURNAL ON DOCUMENT ANALYSIS AND RECOGNITION, SPRINGER, HEIDELBERG, DE, vol. 24, no. 3, 11 June 2021 (2021-06-11), pages 149 - 165, XP037544876, ISSN: 1433-2833, [retrieved on 20210611], DOI: 10.1007/S10032-021-00375-3

## Description

### FIELD

The field relates generally to artificial neural networks and explainable artificial intelligence.

### BACKGROUND

Deep learning allows for the development of more accurate artificial intelligence (AI) than other machine learning methods, even for complex data structures. Unlike conventional machine learning methods, a deep learning model can improve its predictions over time by continuously learning from new transactions. This process of continuous training can be automated, which can allow the deep learning model to remain current at all times.

However, it is challenging to use deep learning in applications where accountability and transparency are essential. This is because the learned patterns and embeddings in deep learning are hidden in a deep neural network (also called deep net) in the form of neuron weights and biases such that the factors that led to the predictions by the deep learning cannot be retrieved without complex and expensive analyses. This black box behavior of deep nets currently limits the usability of deep learning in practical domains where the users demand predictions along with the factors that led to the predictions.

The document "Enhancing Explainability of Deep Reinforcement Learning Through Selective Layer-Wise Relevance Propagation" by T. Huber et al., KI 2019: Advances in Artificial Intelligence, pp. 188-202 discloses a layer-wise relevance propagation concept based on an argmax approach and with an adaptation for DQN algorithms.

The claimed invention is set out in the independent claims. Further developments of the invention are the subject matter of the dependent claims.

## BRIEF DESCRIPTION OF THE DRAWINGS

FIG. 1 is a block diagram of an example system implementing explainable AI (XAI) generation.

FIG. 2 is a block diagram of an example method implementing XAI generation.

FIGS. 3A-3G are block diagrams illustrating working of an XAI model with a single-output neural network model, according to one example.

FIGS. 4A-4B are block diagrams illustrating working of an XAI model with a multi-output neuron network model, according to another example.

FIG. 5 is a block diagram illustrating an example system implementing XAI generation, according to another example.

FIG. 6 is a flowchart illustrating a method of implementing a generalized use case of XAI generation based on the system illustrated in FIG. 5, according to one example.

FIG. 7 is a block diagram of an example computing system in which described technologies can be implemented.

FIG. 8 is a block diagram of an example cloud computing environment that can be used in conjunction with the technologies described herein.

FIG. 9A is a test image showing an example purchase order document.

FIG. 9B is an example prediction of a trained neural network model for the test image shown in FIG. 9A.

FIG. 9C is a diagram illustrating a test image having n channels and a neural network model that receives an input vector representing the test image and makes a prediction.

FIG. 9D is a diagram illustrating an example local explanation generation where a relevance map for a prediction of a neural network model has the same dimensions as an input vector.

FIG. 9E is a diagram illustrating an example local explanation generation where a relevance map for a prediction of a neural network model has different dimensions compared to an input vector.

FIGS. 10A-10D show example user interfaces presenting an explanation of a prediction of a neural network model in a document image context.

## DETAILED DESCRIPTION

### Example A-Overview

Training of a deep neural network (DNN) model involves minimizing a loss function that compares a value predicted by the DNN model to an actual value. During the training, the DNN model learns to recognize and use the patterns in the data. In particular, the DNN model learns how to weight the individual features of the data and draw inferences from the data.

Technologies disclosed herein are based on the knowledge that the information about how the neural network model processes data is stored in the neuron weights and biases. Technologies disclosed herein can extract the feature relevance information stored in the neuron weights and biases and use the extracted information to explain the reasons behind predictions made by the neural network model. The described technologies can greatly enhance the usability of DNN models for applications sensitive to accountability and transparency and facilitate optimization of the DNN models.

### Example B-Example System Implementing XAI Generation

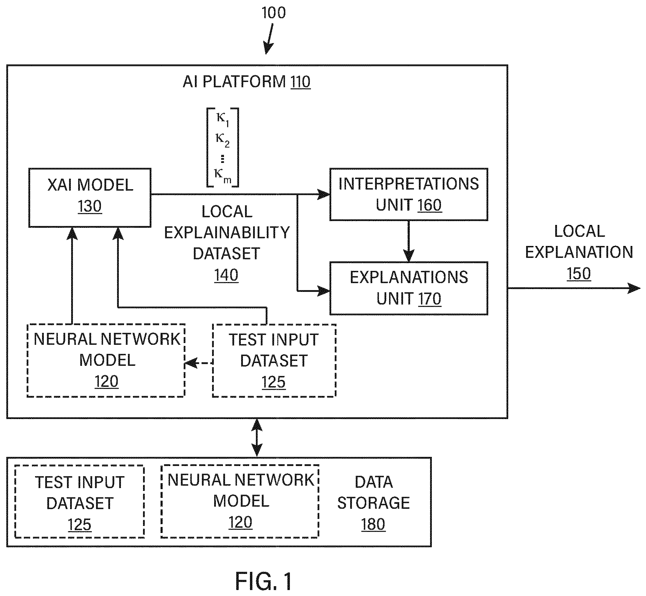

FIG. 1 is a block diagram of an example system 100 implementing explainable AI (XAI) generation. The example system 100 includes an AI platform 110 that can generate a local explanation 150 of a prediction made by a neural network model 120. The AI platform 110 can include one or more explanation and interpretation models. For illustrative purposes, the AI platform 110 is shown as including an XAI model 130 that is configured to generate a local explainability dataset 140, which can be outputted as the local explanation 150 or further processed to generate the local explanation 150. The XAI model 130 can receive the neural network model 120 and a test input dataset 125 as inputs.

The term "model" generally means a function encoded as a computer program. The neural network model 120 is configured to receive an input vector with one or more input features and generate one or more network outputs. In one implementation, the neural network model 120 can be a DNN model, which is a neural network model with at least two hidden layers. In one example, the DNN model can be a trained neural network model (hereafter, trained NN model). In machine learning, a model is trained to perform a task by running a machine learning algorithm on a dataset. Once the model has been trained for the task (i.e., the machine learning algorithm has found a function that is sufficiently accurate for performing the given task in terms of matching inputs to outputs in the dataset), the trained model can be used for making predictions on new examples or for making inferences. In general, the term "trained NN model" means that the weights and biases of the neural network model have been adjusted through training of the neural network model with dataset(s) for a particular task.

The test input dataset 125 can include one or more test input vectors to be fed into the input layer of the neural network model 120 to generate one or more predictions. Each unique test input vector can yield one or more unique predictions from the neural network model 120.

The local explainability dataset 140 generated by the XAI model 130 comprises one or more feature relevance vectors $\kappa$. Each feature relevance vector $\kappa$ can have m relevance values, where m is the number of input features that the neural network model 120 is configured to receive (m is given by the number of input neurons in the neural network model) to perform a particular task. Each relevance value in the feature relevance vector K corresponds to one of the input features for a given test input vector and quantifies the importance or relevance of the input feature to a prediction of the neural network model 120 for the given test input vector.

The AI platform 110 can include an interpretations unit 160, which can transform the feature relevance vectors in the local explainability dataset 140 into a form that can be visualized and/or interpreted by an end user. The transformations that can be carried out by the interpretations unit 160 include, but are not limited to, normalization, regularization, scaling, mapping to a higher or lower dimension space, transforming into a different numeric base system, transformation in frequency or time domain, and the like. The AI platform 110 can include an explanations unit 170, which can take the local explainability dataset 140 or the output of the interpretations unit 160 and map the data into a context that will be easily understood by the end user.

In a particular example, the XAI model 130 can generate the local explainability dataset 140. The interpretations unit 160 and/or explanations unit 170 can receive the local explainability dataset 140 from the XAI model 130 and transform the dataset into percentages and/or ratios. These percentages and/or ratios can be converted into histograms, pie and/or line graphs, heatmaps, and the like to give further insights. In some cases, the dataset could also be scaled or normalized.

In some cases, word clouds or images can be generated. The results can be mapped into a context so that the relevance values in the local explainability dataset 140 are expressed in terms that the end user would easily understand and be able to act on.

The XAI model 130 can be a function (or functions) encoded as a computer program. Similarly, the interpretations unit 160 and explanations unit 170 can be computer programs. The system 100 can include a data storage 180 from which the AI platform 110 can fetch the neural network model 120 and the test input dataset 125. The AI platform 110 can additionally store the local explainability dataset 140 in the data storage 180. The AI platform 110 can also retrieve other data for use in the interpretations unit 160 and/or explanations unit 170.

The AI platform 110 can be implemented in a computer system. The AI platform 110 can be stored in one or more computer-readable storage media or computer-readable storage devices. The technologies described herein can be generic to the specifics of operating systems or hardware and can be applied in any variety of environments to take advantage of the described features.

## Example C-Example Method Implementing XAI Generation

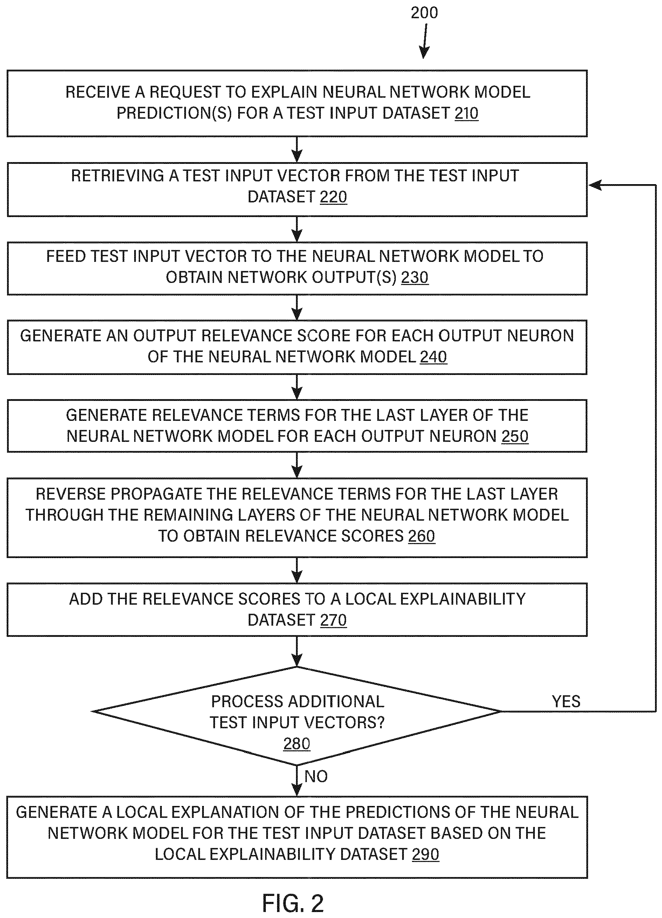

FIG. 2 is a flowchart of an example method 200 of generating a local explanation for a prediction made by a neural network model and can be performed, for example, by the system 100 (see Example B). The local explanation generated by the method 200 can be used to understand the prediction made by the neural network model for a given input vector.

In the example, at 210, the method receives a request to explain prediction(s) of a neural network model for a test input dataset, i.e., a request for a local explanation of the neural network model. The request can include sufficient information to retrieve the neural network model and the test input dataset from memory or storage device(s) or can include the neural network model and the test input dataset.

The neural network model has m input neurons in the input layer to receive an input vector with m input features. The neural network model has a plurality of neurons (i.e., other than the input neurons) arranged in a sequence of layers. The neural network model has neuron weights and biases distributed across the sequence of layers. In one example, the neural network model can be a trained NN model, which means that the neuron weights and biases have been set by training the neural network model for a particular task with dataset(s). In one example, the neural network model can be a trained DNN model.

In one example, the test input dataset includes one or more test input vectors. Each test input vector can have the number of input features the neural network model is configured to receive.

At 220, the method retrieves a test input vector from the test input dataset.

At 230, the method feeds the test input vector to the neural network model to obtain network output(s). The number of network outputs obtained will depend on the number of output neurons of the neural network model, with each output neuron being capable of producing a network output. In some cases, each output neuron of the neural network model includes an activation function to output a probability of prediction.

At 240, the method generates an output relevance score for each network output (or each output neuron) of the neural network model. In some cases, each output neuron outputs a probability of prediction, and the corresponding output relevance score is based on the probability of prediction. In other cases, the output neuron does not output a prediction probability, and a probability function is applied to the output of the output neuron to obtain a prediction probability and the output relevance score.

At 250, the method generates a plurality of relevance scores for the last layer of the neural network model (or for the last layer of the sequence of layers) for each output neuron. In one example, for each output neuron, the plurality of relevance scores are generated for the last layer based on the output relevance score determined for the output neuron, the neuron weights in the last layer of the sequence of layers, and the neuron biases in a lower layer preceding the last layer.

At 260, the method traverses the hidden layers of the sequence of layers in a reverse direction (i.e., from the last hidden layer preceding the last layer to the first hidden layer succeeding the input layer) for each output neuron. During this reverse traversal, the method propagates the relevance scores generated at the last layer at 250 through the sequence of layers, arriving at the first layer with a plurality of relevance scores. At each given hidden layer, the method computes a plurality of relevance scores at the given hidden layer based on neuron weights in the given hidden layer, neuron biases in a lower layer preceding the given hidden layer, and relevance scores in a higher layer succeeding the given hidden layer. In one example, neuron activations are not used in computing relevance scores at the hidden layers.

At 270, the method adds the relevance scores obtained at the first layer to a local explainability dataset. In one example, for each output neuron, a relevance vector $\kappa^{L=1}$ can be populated with the relevance scores obtained at the first layer of the sequence of layers. The relevance vector will have a size $m$ that is the same as the size of the test input vector such that each relevance score in the relevance vector has a corresponding input feature in the test input vector. The relevance vector and test input vector can be single dimensional vectors or high dimensional vectors. The dimension of the relevance vector and the test input vector can be the same or can be different. In cases where the dimensions of the relevance vector are not the same as the dimensions of the test input vector, a mapping technique can be used to map the relevance scores in the relevance vector to the input features in the test input vector. A feature relevance vector K can be computed based on the relevance vector $\kappa^{L=1}$ and the test input vector (e.g., by taking a dot product of the relevance vector and the test input vector). The feature relevance vector K can be added to the local explainability dataset along with the corresponding test input vector and the corresponding network output.

At 280, the method determines if there are additional test input vectors in the test input dataset to process. If there are additional test input vectors to process, the method can return to operation 220 to retrieve another test input vector from the test input dataset. After retrieving another test input vector, the method can repeat operations 230-280.

At 290, the method uses the local explainability dataset to generate a local explanation of the prediction(s) made by the neural network model for the test input dataset. The local explanation can include various transformations of the local explainability dataset and metadata to facilitate understanding of the relevance scores in the dataset by an end user. For example, the explanation can include any of text, images, scores, percentages, graphs, histograms, and visual indicators configured to explain the local explainability dataset within a context of the end user.

The method 200 can be illustrated from alternative perspectives, e.g., from a perspective of an end user, which can be a human or a computer system or process. The method 200 and any of the other methods described herein can be performed by computer-executable instructions (e.g., causing a computing system to perform the method) stored in one or more computer-readable media (e.g., storage or other tangible media) or stored in one of more computer-readable storage devices. Such methods can be performed in software, firmware, hardware, or combinations thereof. Such methods can be performed at least in part by a computing system (e.g., one or more computing devices).

## Example D-Example XAI Model for Local Explainability

Local explainability can show the relevance or importance of the input features received at the input layer of the neural network model to the prediction made by the neural network model. In one example, an XAI model configured to generate local explainability dataset can be built with the following considerations:

The XAI model receives a neural network model and test input vector(s) as inputs. The neural network model can be any type of neural network that does not have loops. The neural network model is trained.

The XAI model calculates relevance scores of neurons in the neural network model using weights and biases of the neural network model.

The XAI model determines the relevance scores at the last layer based on the prediction probability of the neural network model for a given test input vector.

The XAI model reverse propagates relevance scores determined at the last layer through hidden layers of the neural network without using neuron activations in the hidden layers.

The XAI model is memory efficient. For example, once the relevance scores of a given layer L have been calculated using the relevance scores of a higher layer L+1, the relevance scores of the higher layer L + 1 can be discarded since they will not be needed to generate the relevance scores of the lower layer L - 1.

The XAI model corrects for extreme polarities in neuron weights. For example, in a given layer of the neuron network model, the neuron weights can be positive or negative. If one neuron with a particularly negative value and another neuron with a particularly positive value enter one layer of the network, these two neurons might influence the results strongly in that layer, but in the next layer, the effect can be balanced out. To overcome this, absolute values of neuron weights can be considered in calculations of the relevance scores. Other approaches can include using non-linear operations, e.g., root mean square.

In the example, the XAI model can output local explainability dataset comprising one or more feature relevance vectors, one or more test input vectors, and one or more predictions corresponding to the one or more test input vectors. Each feature relevance vector can have the same size (i.e., number of relevance scores) as the number of input features of the neural network model (as determined by the number of input neurons of the neural network model). Each relevance score represented in the feature relevance vector corresponds to one of the input features of a test input vector and quantifies the relevance of the input feature to the prediction made by the neural network model for the test input vector.

In one implementation, computation of a feature relevance vector can start with computing an output relevance of each output neuron of the neural network model for a given input vector.

In one example, the output relevance of a single output neuron of the neural network model can be expressed as:

$$y_o = |\hat{y} - t| + \varepsilon \qquad (1a)$$

In Equation (1a), $\hat{y}$ is probability of predicted output, t is threshold parameter, and $\varepsilon$ is a parameter to avoid $y_o$ with a zero value. The value of $\varepsilon$ is usually very small, e.g., $10^{-6}$.

Equation (1a) assumes that the output neuron outputs prediction probability. If the output neuron does not output prediction probability, the output relevance can be expressed as follows:

$$y_o = |P(\hat{y}) - t| + \varepsilon \tag{1b}$$

In Equation (1b), $\hat{y}$ is predicted output, $P(\hat{y})$ is probability of predicted output, and $\varepsilon$ is a parameter to avoid $y_o$ with a zero value. The value of $\varepsilon$ is usually very small, e.g., $10^{-6}$.

If the neural network model has multiple output neurons, the output relevance of each of the output neurons of the neural network model can be expressed as:

$$y_o = \hat{y} + \varepsilon \tag{2a}$$

In Equation (2a), $\hat{y}$ is probability of predicted output, and $\varepsilon$ is a parameter to avoid $y_o$ with a zero value. The value of $\varepsilon$ is usually very small, e.g., $10^{-6}$.

Equation (2a) assumes that the output neurons output prediction probabilities. If the output neurons do not output prediction probabilities, the output relevance of each of the output neurons can be expressed as:

$$y_o = P(\hat{y}) + \varepsilon \tag{2b}$$

In Equation (2b), $\hat{y}$ is predicted output, $P(\hat{y})$ is probability of predicted output, and $\varepsilon$ is a parameter to avoid $y_o$ with a zero value. The value of $\varepsilon$ is usually very small, e.g., $10^{-6}$.

The predicted output or probability of predicted output in Equations (1a) to (2b) can be obtained by feeding a test input vector to the neural network model.

Computation of the feature relevance vector can further include computing relevance at the last layer (or output layer) of the neural network model. The relevance at the last layer of the neural network model can be expressed as follows:

$$\underline{\kappa}^L = \left(\alpha \underline{w}^L y_o + \beta \underline{b}^{L-1}\right)\frac{1}{\lambda^L} \tag{3}$$

$$\begin{bmatrix} \kappa_1^L \\ \kappa_2^L \\ \kappa_3^L \\ \vdots \\ \kappa_\theta^L \end{bmatrix} = \left( \alpha \begin{bmatrix} w_{11}^L \\ w_{21}^L \\ w_{31}^L \\ \vdots \\ w_{\theta 1}^L \end{bmatrix} y_o + \begin{bmatrix} b_1^{L-1} \\ b_2^{L-1} \\ b_3^{L-1} \\ \vdots \\ b_\theta^{L-1} \end{bmatrix} \right)\frac{1}{\lambda^L} \tag{4}$$

$$\kappa_i^L = \left(\alpha w_{ij}^L y_o + \beta b_i^{L-1}\right)\frac{1}{\lambda^L} = \left(\sum_i \left(\alpha w_{ij}^L y_o, \beta b_i^{L-1}\right)\right)\frac{1}{\lambda^L} \tag{5}$$

Equations (3) to (5) are equivalent but use different notations or mathematical structures. Equation (3) is a generic form of the expression, Equation (4) is a vector representation of the expression, and Equation (5) is a scalar representation of the expression. In Equations (3) to (5), $\kappa_i^L$ is a relevance value of an $i^{th}$ neuron in a layer $L$-1 to the layer $L$; $i$ is the $i^{th}$ neuron in the layer $L$-1 (i.e., $i = 1, 2, 3, ..., \theta$, where $\theta$ is the total number of neurons in the layer $L$-1); $w_{ij}^L$ is a weight in the layer $L$ (or a weight connecting an $i^{th}$ neuron in the layer $L$-1 to $j^{th}$ neurons in the layer $L$ ($j = 1, 2, 3, ...c$, where $c$ is the number of neurons in the last layer)); $b_i^{L-1}$ is a bias term for an $i^{th}$ neuron in the layer $L$-1; $\lambda^L$ is the total number of neurons in the layer $L$; $\alpha$ is a scalar scaling factor; and $\beta$ is a scalar scaling factor, and $y_0$ is output relevance, which can be determined using one of Equations (1a) to (2b).

Computation of the feature relevance vector can further include computing the relevance at each hidden layer of the neural network model in a reverse direction (i.e., from the last hidden layer to the first hidden layer). In one example, the relevance at each hidden layer can be expressed as follows:

$$\underline{\kappa}^L = \left(\alpha W^L \underline{\kappa}^{L+1} + \beta b^{L-1}\right)\frac{1}{\lambda_L} \tag{6}$$

$$\square \begin{bmatrix} \kappa_1^L \\ \kappa_2^L \\ \kappa_3^L \\ \vdots \\ \kappa_\theta^L \end{bmatrix} = \left( \alpha \begin{bmatrix} w_{11}^L & w_{12}^L & w_{13}^L & \cdots & w_{1\lambda}^L \\ w_{21}^L & w_{22}^L & w_{23}^L & \cdots & w_{2\lambda}^L \\ w_{31}^L & w_{32}^L & w_{33}^L & \cdots & w_{3\lambda}^L \\ \vdots & \vdots & \vdots & \cdots & \vdots \\ w_{\theta 1}^L & w_{\theta 2}^L & w_{\theta 3}^L & \cdots & w_{\theta\lambda}^L \end{bmatrix} \begin{bmatrix} \kappa_1^{L+1} \\ \kappa_2^{L+1} \\ \kappa_3^{L+1} \\ \vdots \\ \kappa_\lambda^{L+1} \end{bmatrix} + \beta \begin{bmatrix} b_1^{L-1} \\ b_2^{L-1} \\ b_3^{L-1} \\ \vdots \\ b_\theta^{L-1} \end{bmatrix} \right) \frac{1}{\lambda^L} \tag{7}$$

$$\kappa_i^L = \left( \sum_j \left( \alpha w_{ij}^L \kappa_j^{L+1} \right) + \beta b_i^{L-1} \right) \frac{1}{\lambda^L} \tag{8}$$

Equations (6) to (8) are equivalent but use different notations or mathematical structures. In Equations (6) to (8), $\kappa_i^L$ is a relevance value of an $i^{th}$ neuron in a lower layer $L$-1 to a given layer $L$; $i$ is the $i^{th}$ neuron in the lower layer $L$-1 (i.e., $i$ = 1, 2, 3, ..., $\theta$, where $\theta$ is the total number of neurons in the layer $L$-1); $w_{ij}^L$ is a weight in the given layer $L$ connecting an $i^{th}$ neuron in the lower layer $L$-1 to $j^{th}$ neurons in the given layer $L$; $b_i^{L-1}$ is a bias term for an $i^{th}$ neuron in the lower layer $L$-1, $\lambda^L$ is the total number of neurons in the given layer $L$, $\alpha$ is a scalar scaling factor, and $\beta$ is a scalar scaling factor. L is in a range from 1 to N, where N is the total number of hidden layers in the neural network.

The final result of applying Equations (6) to (8) sequentially to the hidden layers is a relevance vector $\kappa^{L=1}$ at the first hidden layer. The feature relevance vector $\kappa^F$ for a given test input vector can be obtained as follows:

$$\underline{\kappa}^F = \alpha \left( \underline{x} \odot \underline{\kappa}^{L=1} \right) \tag{9}$$

$$\begin{bmatrix} \kappa_1^F \\ \kappa_2^F \\ \kappa_3^F \\ \vdots \\ \kappa_\theta^F \end{bmatrix} = \alpha \left( \begin{bmatrix} x_1 \\ x_2 \\ x_3 \\ \vdots \\ x_\theta \end{bmatrix} \odot \begin{bmatrix} \kappa_1^{L=1} \\ \kappa_2^{L=1} \\ \kappa_3^{L=1} \\ \vdots \\ \kappa_\theta^{L=1} \end{bmatrix} \right) \tag{10}$$

$$\kappa_i^F = \alpha \left( x_i \kappa_i^{L=1} \right) \tag{11}$$

Equations (9) to (11) are equivalent expressions using different mathematical notations and structures. In Equations (9) to (11), $i$ is the $i^{th}$ input feature (i.e., $i$ = 1, 2, 3, ..., $\theta$, where $\theta$ is the total number of input features, which is the same as the total number of input neurons of the neural network model), $x_i$ is the value of an $i^{th}$ input feature, $\kappa_i^F$ is a feature relevance score of an $i^{th}$ input feature, $\kappa_i^{L=1}$ is a relevance score at the first hidden layer (L=1) corresponding to an $i^{th}$ input feature, $\alpha$ is a scalar scaling factor, and $\odot$ is Hadamard product or Schur product.

**Example E-Example Working of the XAI Model**

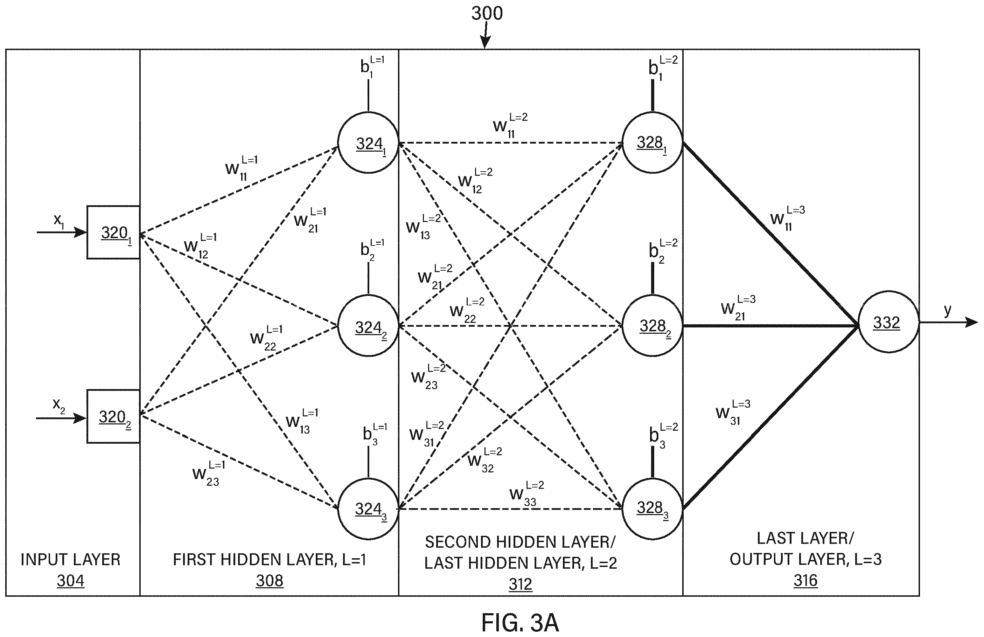

FIGS. 3A-3G illustrate an example of how the XAI model (see Example D) works. The working of the XAI model is described relative to a neural network model 300 that is configured to generate an output $y$ from an input vector $x$.

The neural network model 300 includes an input layer 304, a first hidden layer 308, a second hidden layer 312 (which is also the last hidden layer), and a last layer 316 (which is also the output layer). The neural network model 300 receives input data through the input layer 304. The hidden layers 308, 312 are where manipulation of the input data occurs. The layers 308, 312 are called hidden because their workings are not directly accessible from outside the neural network. Also, the hidden layers are intermediate layers between the input layer 304 and the last layer 316. The last layer 316 is the final product of manipulating the data in the network. Although the neural network model 300 is illustrated as a feed forward network, the XAI model is not restricted to feed forward networks and could be used with any neural network model that does not have loops.

In the illustrated example, the input layer 304 has a first neuron $320_1$ that can sense an input feature $x_1$ and a second neuron $320_2$ that can sense an input feature $x_2$. As an example, a neural network model configured to map an image to an object can sense input features related to the image, such as edges in the image, pixel intensity, and so on. The first hidden layer 308 includes a first neuron $324_1$, a second neuron $324_2$, and a third neuron $324_3$ for manipulating data within the network. The second hidden layer 312 includes a first neuron $328_1$, a second neuron $328_2$, and a third neuron $328_3$ for manipulating data within the network. The output layer 316 includes an output neuron 332 that produces an output $y$. As such, the neural network model 300 is configured to map inputs $x_1$, $x_2$ to output $y$.

The neural network model 300 is an example of a deep neural network (DNN) in that the network has more than one hidden layer. The neural network model 300 can have far more hidden layers than the two hidden layers illustrated in FIG. 3A. For simplicity, the neural network model 300 is shown in FIG. 3A as having only one output neuron 332 in the output layer 316. In other examples, the neural network model 300 can be configured to have multiple output neurons in the output layer. In general, the neural network model 300 can have far more numerous neurons and layers than illustrated in FIG. 3A.

The first neuron $324_1$ in the first hidden layer $308_1$ is connected to the first neuron $320_1$ in the input layer 304 via a connection with weight $w_{11}^{L=1}$ and to the second neuron $320_2$ in the input layer 304 via a connection with weight $w_{21}^{L=1}$. The first neuron $324_1$ also has a bias $b_1^{L=1}$. The second neuron $324_2$ in the first hidden layer 308 is connected to the first neuron $320_1$ in the input layer 304 via a connection with weight $w_{12}^{L=1}$ and to the second neuron $320_2$ in the input layer 304 via a connection with weight $w_{22}^{L=1}$. The second neuron $324_2$ also has a bias $b_2^{L=1}$. The third neuron $324_3$ in the first hidden layer 308 is connected to the first neuron $320_1$ in the input layer 304 via a connection with weight $w_{13}^{L=1}$ and to the second neuron $320_2$ in the input layer 304 via a connection with weight $w_{23}^{L=1}$. The third neuron $324_3$ also has a bias $b_3^{L=1}$.

The first neuron $328_1$ in the second hidden layer 312 is connected to the first, second, and third neurons $324_1$, $324_2$, $324_3$ of the first hidden layer 308 via connections with weights $w_{11}^{L=2}$, $w_{21}^{L=2}$, and $w_{31}^{L=2}$, respectively. The first neuron $328_1$ also has a bias $b_1^{L=2}$. The second neuron $328_2$ in the second hidden layer 312 is connected to the first, second, and third neurons $324_1$, $324_2$, $324_3$ of the first hidden layer 308 via connections with weights $w_{12}^{L=2}$, $w_{22}^{L=2}$, and $w_{32}^{L=2}$, respectively. The second neuron $328_2$ is also connected to a bias $b_2^{L=2}$. The third neuron $328_3$ in the second hidden layer 312 is connected to the first, second, and third neurons $324_1$, $324_2$, $324_3$ of the first hidden layer 308 via connections with weights $w_{13}^{L=2}$, $w_{23}^{L=2}$, and $w_{33}^{L=2}$, respectively. The third neuron $328_3$ is also connected to a bias $b_3^{L=2}$. The output neuron 332 is connected to the first, second, and third neurons $328_1$, $328_2$, $328_3$ via connections with weights $w_{11}^{L=3}$, $w_{21}^{L=3}$, and $w_{31}^{L=3}$, respectively.

Relevance calculation starts with feeding a test input vector to the neural network model to generate a predicted output or a probability of predicted output. Based on the predicted output or probability of predicted output, an output relevance is determined for the output neuron that generated the predicted output or probability of predicted output. This operation does not change the neuron weights and biases of the neural network model. After obtaining the output relevance of the output neuron, the relevance at the last layer of the neural network model is computed. The hidden layers of the neural network are then traversed sequentially from the last hidden layer to the first hidden layer while calculating relevance scores, ending at the first hidden layer with a set of relevance scores corresponding to the set of input features specified by the test input vector.

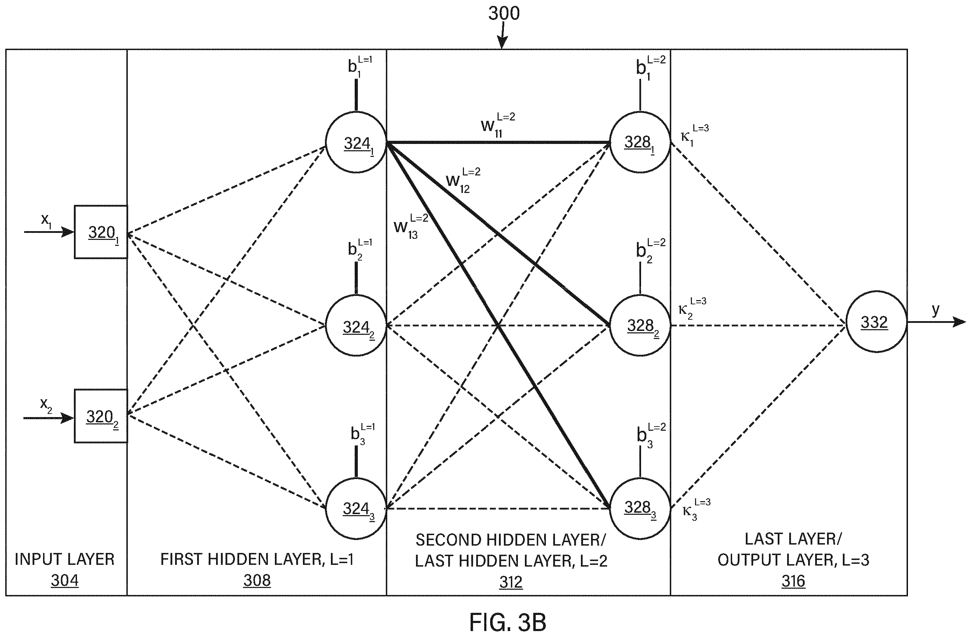

FIG. 3A illustrates calculation of the relevance at the last layer (or output layer) 316 (L=3). In FIG. 3A, the weight $w_{11}^{L=3}$ connecting the output neuron 332 in the last layer 316 to the first neuron $328_1$ in the last hidden layer (or second hidden layer) 312 (L=2), the bias $b_1^{L=2}$ of the first neuron $328_1$, and the prediction probability at the output neuron 332 for a particular test input vector fed to the neural network model are used to calculate a first relevance value $\kappa_1^{L=3}$ (shown in FIG. 3B) at the last layer 316 according to Equations (3) to (5) in Example D.

The weight $w_{21}^{L=3}$ connecting the output neuron 332 to the second neuron $328_2$ in the last hidden layer 312 and the bias $b_2^{L=2}$ of the second neuron $328_2$ are used to calculate a second relevance value $\kappa_2^{L=3}$ (shown in FIG. 3B) at the last layer 316 according to Equations (3) to (5) in Example D.

The weight $w_{31}^{L=3}$ connecting the output neuron 332 to the third neuron $328_3$ in the last hidden layer 312 and the bias $b_3^{L=2}$ of the third neuron $328_3$ are used to calculate a third relevance value $\kappa_3^{L=3}$ (shown in FIG. 3B) at the last layer 316 according to Equations (3) to (5) in Example D.

The relevance scores at the last layer (L=3) can be expressed as follows:

$$\kappa_1^{L=3} = (\alpha w_{11}^{L=3} y_o + \beta b_1^{L=2}) \frac{1}{\lambda^{L=3}} \tag{12a}$$

$$\kappa_2^{L=3} = (\alpha w_{21}^{L=3} y_o + \beta b_2^{L=2}) \frac{1}{\lambda^{L=3}} \tag{12b}$$

$$\kappa_3^{L=3} = (\alpha w_{31}^{L=3} y_o + \beta b_3^{L=2}) \frac{1}{\lambda^{L=3}} \tag{12c}$$

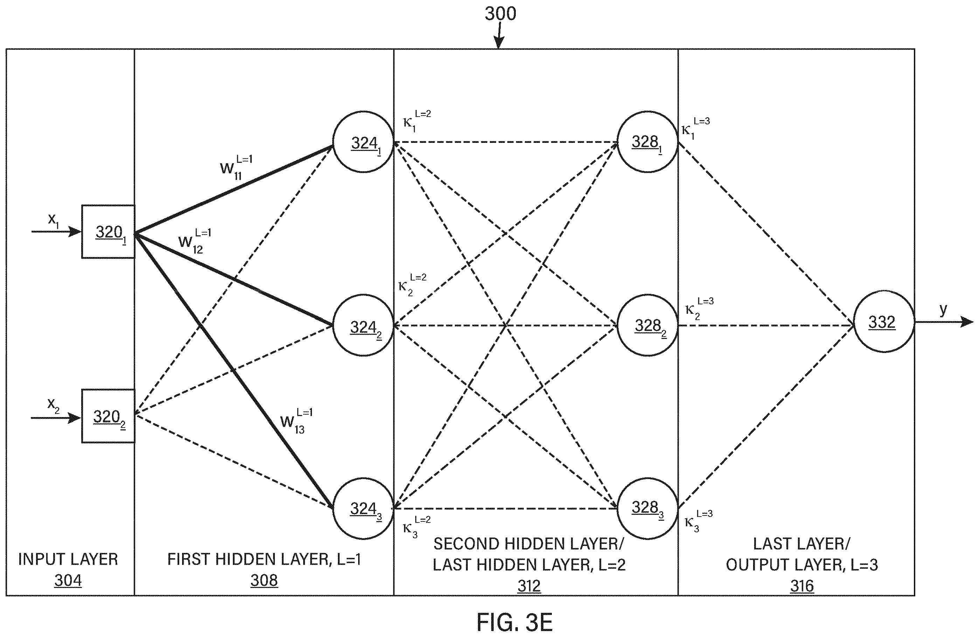

FIGS. 3B-3D illustrate calculation of the relevance at the last hidden layer (or second hidden layer) 312 (L=2). In FIG. 3B, the weights $w_{11}^{L=2}$, $w_{12}^{L=2}$, and $w_{13}^{L=2}$ connecting the first neuron $324_1$ in the first hidden layer 308 (L=1) to the neurons $328_1$, $328_2$, $328_3$ in the last hidden layer 312, the bias $b_1^{L=1}$ of the first neuron $324_1$, and the relevance values at the last layer (or output layer) 316 (L=3) are used to calculate a first relevance value $\kappa_1^{L=2}$ (shown in FIG. 3E) at the last hidden layer 312 according to Equations (6) to (8) in Example D.

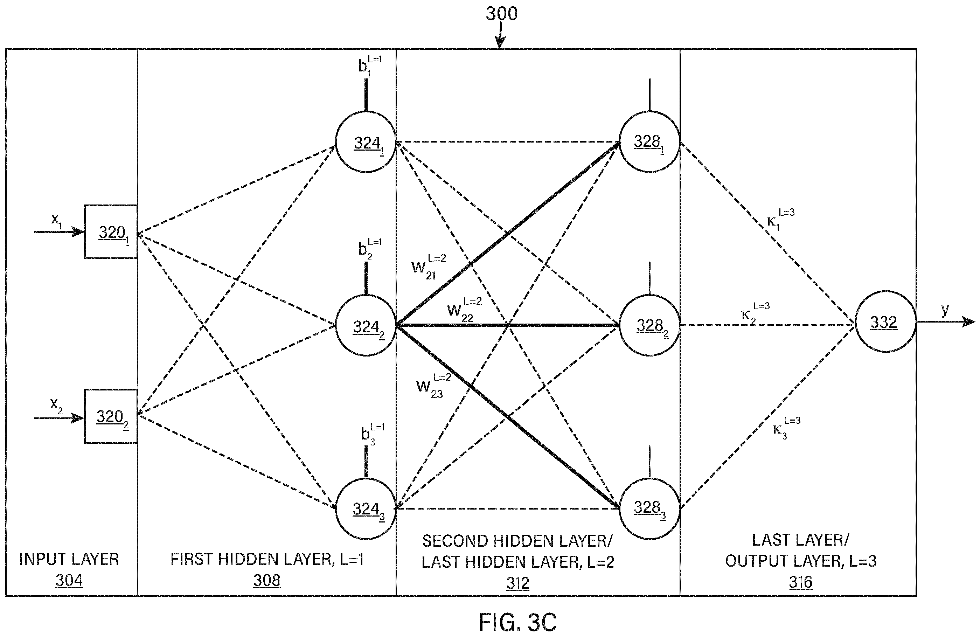

In FIG. 3C, the weights $w_{21}^{L=2}$, $w_{22}^{L=2}$, and $w_{23}^{L=2}$ connecting the second neuron $324_2$ in the first hidden layer 308 to the neurons $328_1$, $328_2$, $328_3$ in the second hidden layer 312, the bias $b_2^{L=1}$ of the second neuron $324_2$, and the relevance values at the last layer 316 (L=3) are used to calculate a second relevance value $\kappa_2^{L=2}$ (shown in FIG. 3E) at the last hidden layer 312 according to Equations (6) to (8) in Example D.

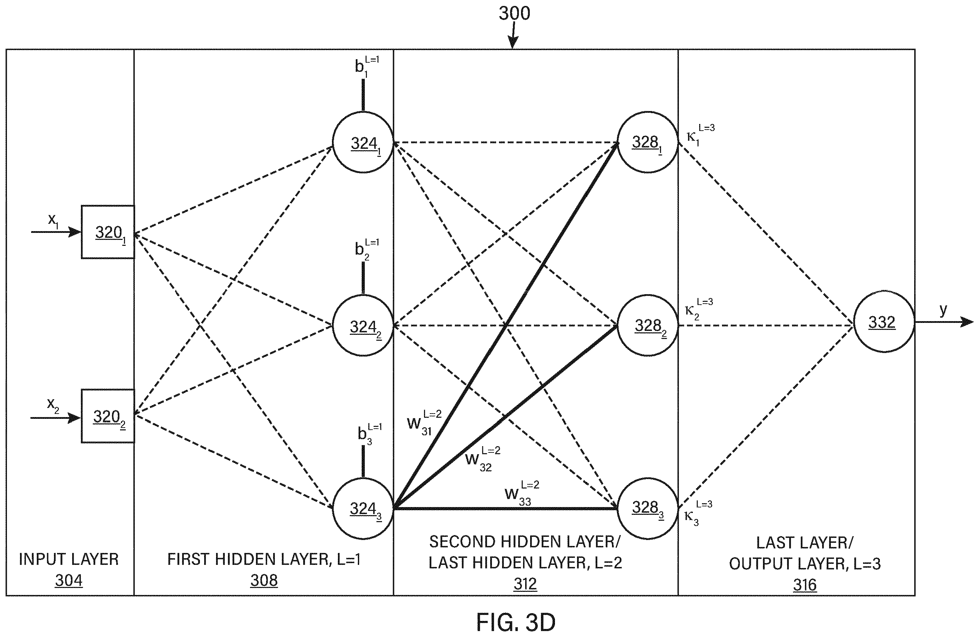

In FIG. 3D, the weights $w_{31}^{L=2}$, $w_{32}^{L=2}$, and $w_{33}^{L=2}$ connecting the third neuron $324_3$ in the first hidden layer 308 to the neurons $328_1$, $328_2$, $328_3$ in the last hidden layer 312, the bias $b_3^{L=1}$ of the third neuron $324_3$, and the relevance values at the last layer 316 are used to calculate a third relevance value $\kappa_3^{L=2}$ (shown in FIG. 3E) at the last hidden layer 312 according to Equations (6) to (8) in Example D.

The relevance scores at the last hidden layer 312 (L=2) can be expressed as follows:

$$\kappa_1^{L=2} = (\alpha(w_{11}^{L=2}\kappa_1^{L=3} + w_{12}^{L=2}\kappa_2^{L=3} + w_{13}^{L=2}\kappa_3^{L=3}) + \beta b_1^{L=1}) \frac{1}{\lambda^{L=2}} \tag{13a}$$

$$\kappa_2^{L=2} = (\alpha(w_{21}^{L=2}\kappa_1^{L=3} + w_{22}^{L=2}\kappa_2^{L=3} + w_{23}^{L=2}\kappa_3^{L=3}) + \beta b_2^{L=1}) \frac{1}{\lambda^{L=2}} \tag{13b}$$

$$\kappa_3^{L=2} = (\alpha(w_{31}^{L=2}\kappa_1^{L=3} + w_{32}^{L=2}\kappa_2^{L=3} + w_{33}^{L=2}\kappa_3^{L=3}) + \beta b_3^{L=1}) \frac{1}{\lambda^{L=2}} \tag{13c}$$

After calculating the relevance scores at the last hidden layer 312 (L=2), the relevance scores calculated at the last layer 316 (L=3) can be discarded for memory efficiency.

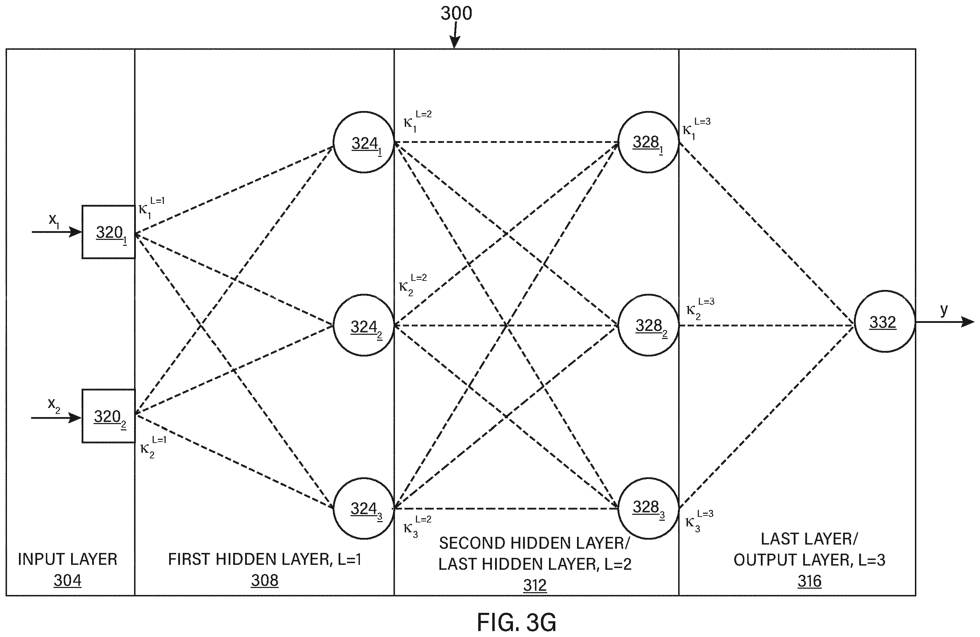

FIGS. 3E-3F illustrate calculation of the relevance at the first hidden layer 308 (L=1). In FIG. 3E, the weights $w_{11}^{L=1}$ $w_{12}^{L=1}$, and $w_{13}^{L=1}$ connecting the input neuron $320_1$ to the neurons $324_1$, $324_2$, $324_3$ of the first hidden layer 308 and the relevance scores associated with the last hidden layer 312 (L=2) are used to calculate a first relevance score $\kappa_1^{L=1}$ (shown in FIG. 3G) at the first hidden layer 308.

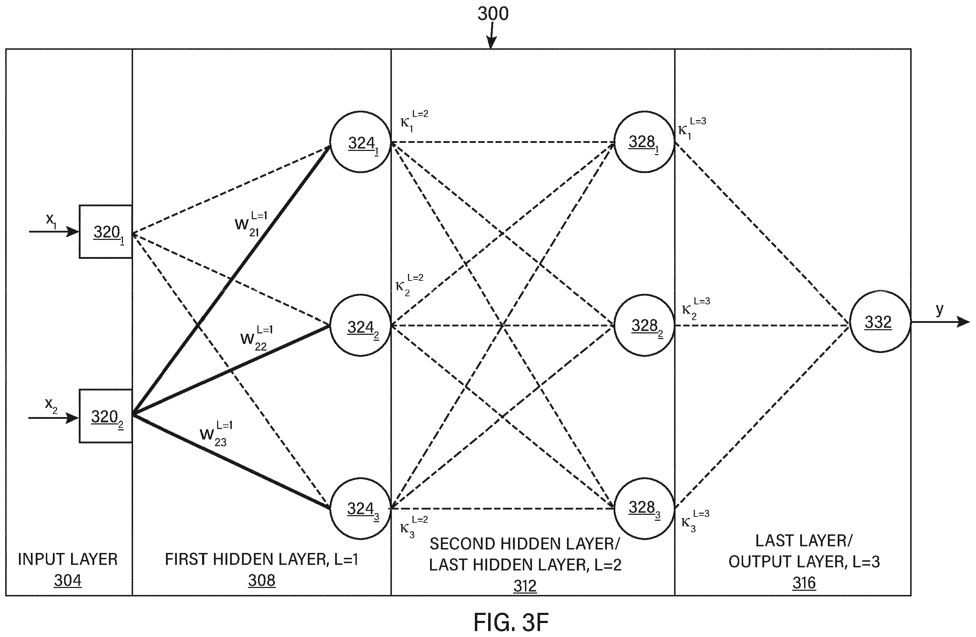

In FIG. 3F, the weights $w_{21}^{L=1}$, $w_{22}^{L=1}$, and $w_{23}^{L=1}$ connecting the input neuron $320_2$ to the neurons $324_1$, $324_2$, $324_3$ of the first hidden layer 308 and the relevance scores at the last hidden layer 312 are used to calculate a second relevance value $\kappa_2^{L=1}$ (shown in FIG. 3G) at the first hidden layer 308.

The relevance scores at the first hidden layer 308 (L=1) can be expressed as follows:

$$\kappa_1^{L=1} = \left(\alpha(w_{11}^{L=1}\kappa_1^{L=2} + w_{12}^{L=1}\kappa_2^{L=2} + w_{13}^{L=1}\kappa_3^{L=2})\right) \frac{1}{\lambda^{L=1}} \tag{14a}$$

$$\kappa_2^{L=1} = \left(\alpha(w_{21}^{L=1}\kappa_1^{L=2} + w_{22}^{L=1}\kappa_2^{L=2} + w_{23}^{L=1}\kappa_3^{L=2})\right) \frac{1}{\lambda^{L=1}} \tag{14b}$$

After calculating the relevance scores at the first hidden layer 308, the relevance scores calculated at the last hidden layer 312 (L=2) can be discarded for memory efficiency.

The relevance scores $\kappa_1^{L=1}$, $\kappa_2^{L=1}$ calculated at the first hidden layer 308 (L=1) are shown in FIG. 3G. A relevance vector can be populated with the relevance scores $\kappa_1^{L=1}$, $\kappa_2^{L=1}$.

A feature relevance vector based on the relevance vector and the input vector can be determined according to Equations (9) to (11). The feature relevance vector can be expressed as follows:

$$\begin{bmatrix} \kappa_1^F \\ \kappa_2^F \end{bmatrix} = \begin{bmatrix} \alpha x_1 \kappa_1^{L=1} \\ \alpha x_2 \kappa_2^{L=1} \end{bmatrix} \tag{15}$$

In Equation (15), $\alpha$ is a scalar scaling factor, $x_1$, $x_2$ are input features, and $\kappa_1^{L=1}$, $\kappa_2^{L=1}$ are relevance scores at the first hidden layer (L=1). The final output of the XAI model can be the feature relevance vector. The local explainability dataset can include the feature relevance vector along with other data, e.g., the test input vector corresponding to the feature relevance vector and the predicted output or probability of predicted output used in computing the output relevance corresponding to the feature relevance vector. A local explanation of the neural network model 300 can be generated based on the local explainability dataset.

**Example F-Example Working of the XAI Model with Multi-Output Neural Network Model**

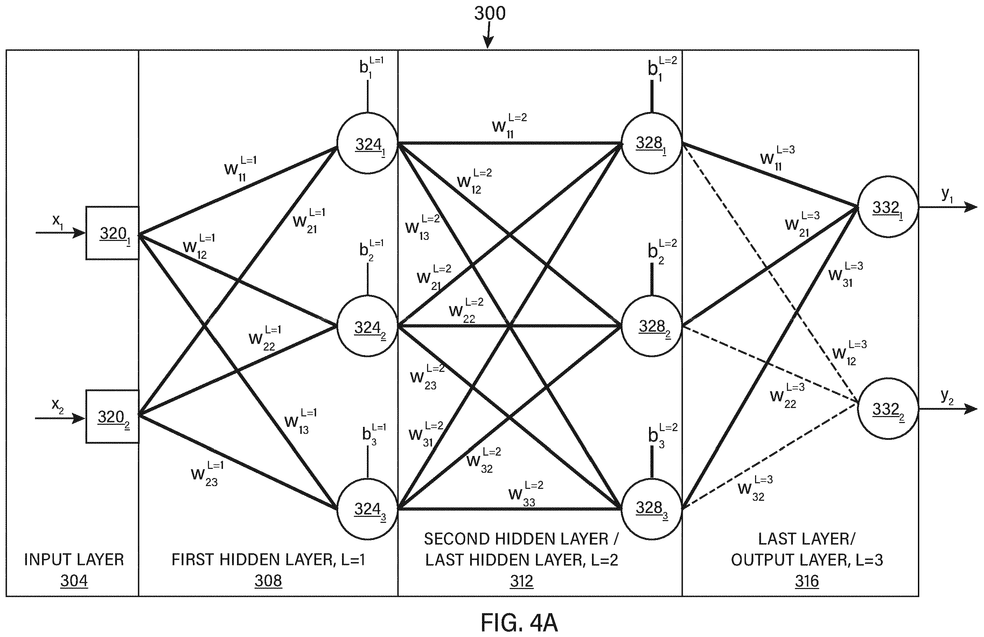

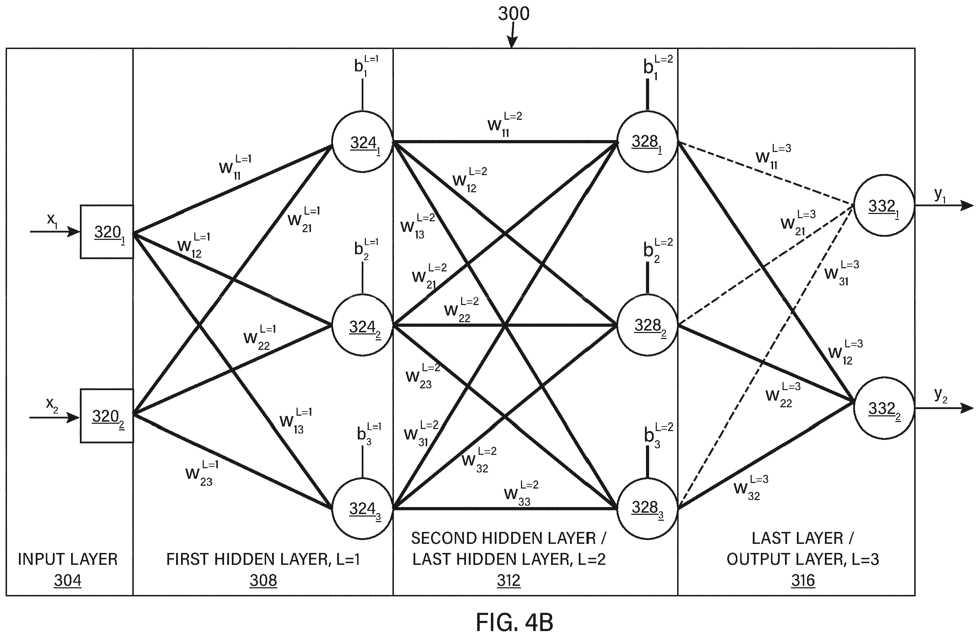

For a neural network model with multiple output neurons in the last layer, the calculations in Equations (1a) to (11) (see Example E) are performed for each of the output neurons. For example, FIGS. 4A and 4B show the neural network model 300 modified to include two output neurons $332_1$, $332_2$. FIG. 4A shows the path from the input neurons to the output neuron $332_1$ across the sequence of layers with bold lines, and FIG. 4B shows the path from the input neurons to the output neuron $332_2$ in bold lines. After computing the output relevance for the output neuron $332_1$, relevance scores can be computed according to the path highlighted in FIG. 4A to obtain a feature relevance vector corresponding to the output neuron $332_1$. Similarly, after computing the output relevance for the output neuron $332_2$, relevance scores can be computed according to the path highlighted in FIG. 4B to obtain a feature relevance vector corresponding to the output neuron $332_2$.

The process for computing the feature relevance vectors for the paths shown in FIGS. 4A and 4B is the same as described for computing the feature relevance vector in FIGS. 3A-3G, with the exception of the particular weights involved in the computations at the last layer. For the path shown in FIG. 4A, the relevant weights in the last layer are those that connect the neurons in the last hidden layer 312 (L=2) to the output neuron $332_1$ in the last layer 316 (L=3). Where $y_1$ is the output relevance computed for the output neuron $332_1$, the relevance scores at the last layer for the output neuron $332_1$ can be expressed as:

$$\kappa_1^{L=3} = (\alpha w_{11}^{L=3} y_1 + \beta b_1^{L=2})\frac{1}{\lambda^{L=3}} \tag{16a}$$

$$\kappa_2^{L=3} = (\alpha w_{21}^{L=3} y_1 + \beta b_2^{L=2})\frac{1}{\lambda^{L=3}} \tag{16b}$$

$$\kappa_3^{L=3} = (\alpha w_{31}^{L=3} y_1 + \beta b_3^{L=2})\frac{1}{\lambda^{L=3}} \tag{16c}$$

For the path shown in FIG. 4B, the relevant weights in the last layer are those that connect the neurons in the last hidden layer 312 (L=2) to the output neuron $332_2$ in the last layer 316 (L=3). Where $y_2$ is the output relevance computed for the output neuron $332_2$, the relevance scores at the last layer for the output neuron $332_2$ can be expressed as:

$$\kappa_1^{L=3} = (\alpha w_{12}^{L=3} y_2 + \beta b_1^{L=2})\frac{1}{\lambda^{L=3}} \tag{17a}$$

$$\kappa_2^{L=3} = (\alpha w_{22}^{L=3} y_2 + \beta b_2^{L=2})\frac{1}{\lambda^{L=3}} \tag{17b}$$

$$\kappa_3^{L=3} = (\alpha w_{32}^{L=3} y_2 + \beta b_3^{L=2})\frac{1}{\lambda^{L=3}} \tag{17c}$$

Thus, in the example in FIGS. 4A and 4B, there will be two feature relevance vectors - one feature relevance vector for the output neuron $332_1$ and another feature relevance vector for the output neuron $332_2$. In general, if there are *n* output neurons, there will be *n* feature relevance vectors. These feature relevance vectors can be added to the local explainability dataset for generation of local explanation.

**Example G-Example System Implementing Local Explanation Generation**

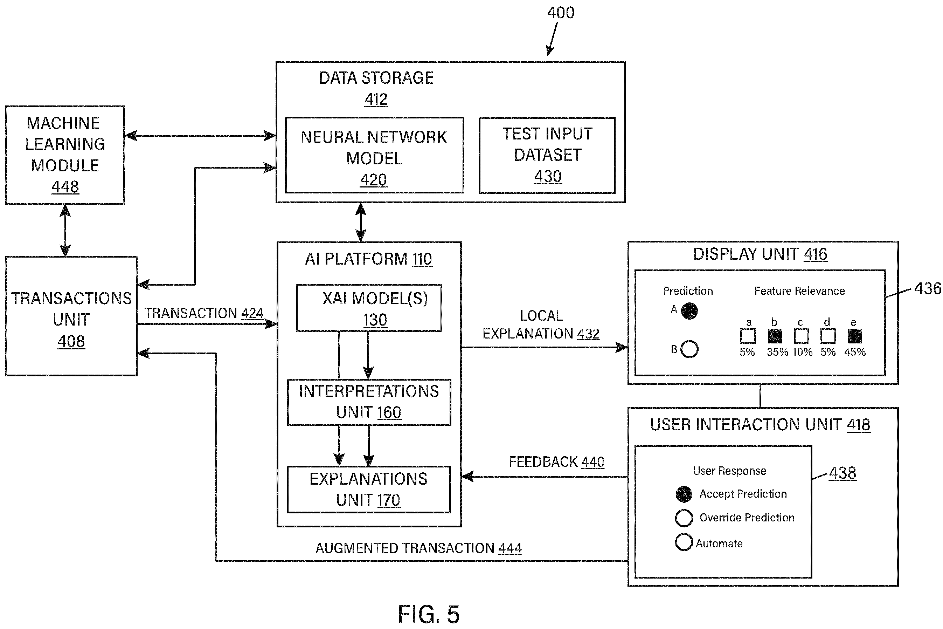

FIG. 5 is a block diagram illustrating an example system 400 implementing local explanation generation. The system 400 includes the AI platform 110, which can communicate with a transactions unit 408, a data storage 412, a display unit 416, and a user interaction unit 418. In the example, the AI platform 110 includes one or more XAI models 130, the interpretations unit 160, and the explanations unit 170 (see Example B).

In one example, the AI platform 110 can fetch a neural network model 420 from the data storage 412 for processing of a transaction 424 received from the transactions unit 408. The neural network model 420 can be a trained NN model. The AI platform 110 can also fetch a test input dataset 430 from the data storage 412 for processing of the transaction 424. The neural network model 420 and the test input dataset 430 can be provided to an XAI model 130 for generation of a local explainability dataset, which can comprise one or more feature relevance vectors populated with relevance scores determined using weights, biases, and prediction probability of the neural network model, as previously described. The AI platform 110 can output a local explanation 432 based on the local explainability dataset.

The display unit 416 can receive the local explanation 432 from the AI platform 110 and provide a representation 436 of the local explanation 432. The user interaction unit 418 can include a set of options 438 that allow a user to interact with the local explanation 432. The user can be a human user or a system. In response to selecting an option from the set of options 438, the user interaction unit 418 can provide further options to the user. For example, if the user wishes to override the prediction(s) of the neural network model, the user interaction unit 418 can further display an interface that allows the user to adjust the prediction.

In some cases, the user interaction unit 418 can send feedback 440 to the AI platform 110 based on changes made at the user interaction unit 418. In some cases, the user interaction unit 418 can also send an augmented transaction 444 to the transactions unit 408. The augmented transaction 444 can include the user response. In some cases, the transactions unit 408 can include or communicate with a machine learning module 448. The machine learning module 448 can in some cases determine whether the neural network model 420 should be retrained or otherwise adjusted based on information contained in the augmented transaction 444. In some cases, the machine learning module 448 can trigger retraining or adjustment of the neural network model. The retrained/adjusted neural network model can be used to make predictions.

**Example H-Example Method Implementing XAI Generation**

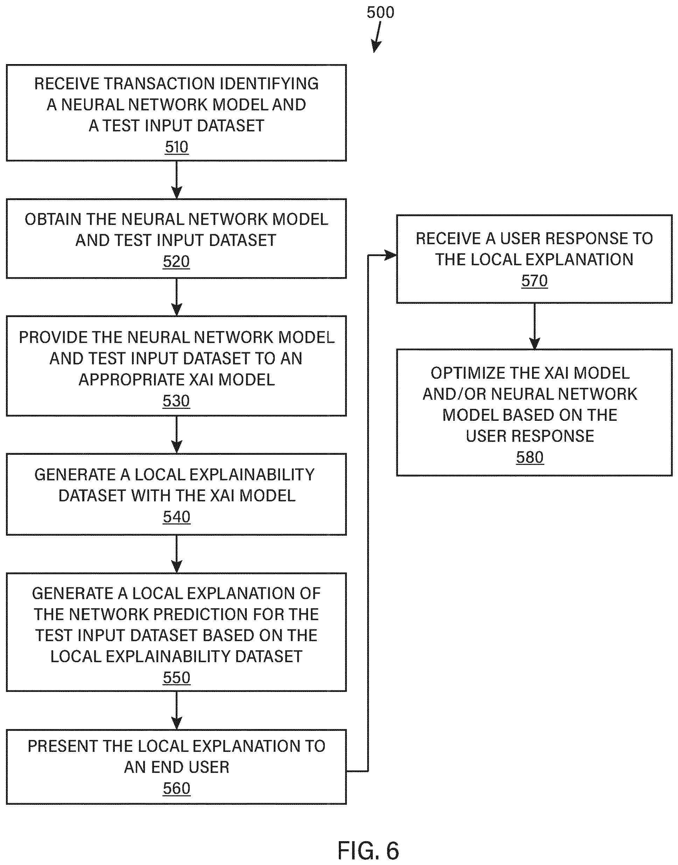

FIG. 6 is a flowchart of an example method 500 implementing XAI generation based on the system 400 (see Example G).

At 510, the method receives a transaction. The transaction contains a request for a local explanation of a prediction of a neural network model for a test input dataset, which can have one or more test input vectors. The neural network model can be a trained NN model. The transaction can include identifying information for the desired neural network model and the test input dataset.

At 520, the method parses the transaction to determine the neural network model to use and obtains the neural network model. The method also obtains the test input dataset.

At 530, the method parses the transaction to determine the XAI model to use in explaining the prediction of the neural network model and provides the neural network model and test input dataset to the appropriate XAI model.

At 540, the method generates local explainability dataset with the XAI model based on the weights, biases, and output of the neural network model for the test input dataset. The local explainability dataset can include one or more feature relevance vectors that quantify the relevance of input features to the network output (or prediction).

At 550, the method generates a local explanation based on the local explainability dataset. The local explanation can be the raw local explainability dataset or information derived from the local explainability dataset. The local explanation can include metadata and the like to improve understanding of the feature relevance vectors in the local explainability dataset within a context of an end user.

At 560, the method presents the local explanation to an end user, which can be a human user or computer.

At 570, the method receives a user response to the local explanation. For example, the method can present a set of options to the user from which the user can make a selection. For example, the set of options can include "accept the prediction" if the feature relevance seems reasonable and appropriate, "override the prediction" if the feature relevance seems to be in error, and "automate" generation of the prediction because the prediction can be trusted. The method can receive one of the options selected by the user. If the option includes overriding the prediction, the method can ask the user for adjustments to the prediction (e.g., feature relevance scores can be adjusted).

At 580, the method uses the user response for further optimization of the XAI model and/or neural network model. For example, for a given input vector, the neural network model makes a prediction, and the XAI model explains this prediction. A user can, for example, override the prediction and make adjustments to the feature relevance scores indicated in the explanation. These changes can be captured. In one example, a similarity score between the data collected from the user response and the data used in training the neural network model can be computed. If there is sufficient dissimilarity between the user response and the training data, retraining of the neural network model is triggered. On the other hand, if the similarity score is high but the neural network model performance or explanation of the performance of the model is low, an investigation of the neural network model generalization can be triggered. In general, optimization that can be made can include model retuning, model refinement, delta training, model generalization, addition and/or deletion of models for a subset of problems, change in model architecture, and use of a latest model design. The optimized neural network model can be used to make predictions.

**Example I-Data Model Mapping Tool Implementing AI Explanation Generation**

In the example, the transactions unit 408 in FIG. 5 can be a tool supporting the mapping and matching of data structures (or data models). In this case, the transactions unit 408 can provide two semantically similar but different data models to the AI platform 110 for the prediction of the correct mapping with the ambition to maintain accurate data lineage.

The AI platform 110 can fetch the appropriate trained NN model and use the trained NN model to provide the predicted mappings (i.e., the inference). The AI platform 110 can use the appropriate XAI model 130 with the weights and biases of the trained NN model and the predicted mappings to generate one or more feature relevance vectors. The local explainability dataset can include the feature relevance vector(s). The AI platform 110 can add the input features (e.g., semantic context, entity and field names, data types and structures including cardinalities) considered for the prediction as well as the predicted mappings to the local explainability dataset. The AI platform 110 can generate a local explanation based on the local explainability dataset and present the local explanation to a user, e.g., by transmitting the local explanation to the display unit 416.

The display unit 416 can present the local explanation to a user. The user interactions unit 418 can present a set of options to the user based on the local explanation. The options can include, for example, accept the predicted mapping if features and relevance values seem reasonable and appropriate, override the predicted mapping if it appears to be in error or is unrealistic, and automate the mapping if the prediction is trusted and typically proves to be accurate.

The user can select one of the options. Depending on the selected option, additional operations can be performed. For example, if the user selects the option to override the predicted mapping, the user interactions unit 418 can allow the user to adjust the relevant features and their relevance values. In this case, the changes made by the user can be propagated back to the AI platform 110 as feedback and used to optimize the XAI model and/or trained NN model.

An augmented transaction can be fed back to the transactions unit 408 for further processing. The augmented transaction can include, for example, identifying information for the transaction, the local explanation, and any user responses to the local explanation. In some cases, processing of the augmented transaction at the transactions unit 408 can trigger optimization of the trained NN model.

**Example J-Service/Sales Orders Completion Date Prediction Implementing AI Explanation Generation**

In the example, the transactions unit 408 in FIG. 5 can be a tool supporting prediction of a service/sales orders completion date. In this case, the transaction provided by the transactions unit 408 to the AI platform 110 can include a request to predict whether an order can be completed within a certain deadline or not. The transaction can further include a request to provide an estimated completion date if the order cannot be completed. The transaction can further include the input data for a trained model that will make the prediction.

The AI platform 110 can fetch the appropriate trained NN model and provide the trained NN model and the input data to the appropriate XAI model 130. The XAI model 130 can generate one or more feature relevance vectors for the input data using weights and biases in the trained NN model and prediction of the trained NN model for the input data. The local explainability dataset can include the feature relevance vector(s). The AI platform 110 can add the input features (e.g., business entities and field names) considered for the prediction as well as the prediction to the local explainability dataset. The AI platform 110 can generate a local explanation based on the local explainability dataset and present the local explanation to a user, e.g., by transmitting the local explanation to the display unit 416.

The display unit 416 can present the local explanation to a user. The user interactions unit 418 can present a set of options to the user based on the local explanation. The options can include, for example, accept the prediction (and corresponding completion date) if features and relevance values seem reasonable and appropriate, override the prediction (and corresponding completion date) if it appears to be in error or is unrealistic, and automate the prediction if it is trusted and typically proves to be accurate.

The user can select one of the options. Depending on the selected option, additional operations can be performed. For example, if the user selects the option to override the predicted mapping, the user interactions unit 418 can allow the user to adjust the relevant features and their relevance values. In this case, the changes made by the user can be propagated back to the AI platform 110 as feedback and used to optimize the XAI model and/or trained NN model.

An augmented transaction can be fed back to the transactions unit 408 for further processing. The augmented transaction can include, for example, identifying information for the transaction, the local explanation, and any user responses to the local explanation. In some cases, processing of the augmented transaction at the transactions unit 408 can trigger optimization of the trained NN model.

**Example K-Next Actions Prediction for Customer Tickets Implementing AI Explanation Generation**

In the example, the transactions unit 408 in FIG. 5 can be a tool supporting prediction for customer tickets. In this case, the transaction provided by the transactions unit 408 to the AI platform 110 can include the current stage of the ticket and previous actions and a request to predict the next possible best action and/or next possible best stage along with the reasons behind the prediction of a certain action.

The AI platform 110 can fetch the appropriate trained NN model and provide the trained NN model and input data to the appropriate XAI model 130. The XAI model 130 can generate one or more feature relevance vectors for the input data using weights and biases in the trained NN model and prediction of the trained NN model for the input data. The local explainability dataset can include the feature relevance vector(s). The AI platform 110 can add the input features (e.g., related metadata, previous actions, and field names) considered for the prediction as well as the prediction to the local explainability dataset. The AI platform 110 can generate a local explanation based on the local explainability dataset and present the local explanation to a user, e.g., by transmitting the local explanation to the display unit 416.

The display unit 416 can present the local explanation to a user. The user interactions unit 418 can present a set of options to the user based on the local explanation. The options can include, for example, accept the prediction if features and relevance values seem reasonable and appropriate, override the prediction if it appears to be in error or is unrealistic, and automate the prediction if it is trusted and typically proves to be accurate.

The user can select one of the options. Depending on the selected option, additional operations can be performed. For example, if the user selects the option to override the predicted mapping, the user interactions unit 418 can allow the user to adjust the relevant features and their relevance values. In this case, the changes made by the user can be propagated back to the AI platform 110 as feedback and used to optimize the XAI model and/or trained NN model.

An augmented transaction can be fed back to the transactions unit 408 for further processing. The augmented transaction can include, for example, identifying information for the transaction, the local explanation, and any user responses to the local explanation. In some cases, processing of the augmented transaction at the transactions unit 408 can trigger optimization of the trained NN model.

**Example L-Entities Predictions in Financial Documents Implementing AI Explanation Generation**

In the example, the transactions unit 408 in FIG. 5 can be a tool that provides semantic mapping of different financial entities present in different kinds of financial documents (e.g., sales orders, purchase orders, service orders, payment advices, invoices, receipts, payment notes, bank transfers, bank formulas, and the like). The financial documents can be in the form of images without color gradients, which require using nonlinear programming, object detection, and classification to solve. In this case, the transaction provided to the AI platform 110 can include a request to predict the location, class labels, and text string of a financial entity.

The AI platform 404 can retrieve the appropriate trained NN model and provide the trained NN model and input data to the appropriate XAI model 130. The XAI model 130 can generate one or more feature relevance vectors for the input data using weights and biases in the trained NN model and prediction of the trained NN model for the input data. The local explainability dataset can include the feature relevance vector(s). The AI platform 110 can add the input features (e.g., bounding surface, class labels, and text strings) considered for the prediction as well as the prediction to the local explainability dataset. The AI platform 110 can generate a local explanation based on the local explainability dataset and transmit the local explanation to the display unit 416.

The display unit 412 can present the local explanation to a user. The user interactions unit 418 can present a set of options to the user based on the local explanation. The options can include, for example, accept the prediction if features and relevance values seem reasonable and appropriate, override the prediction if it appears to be in error or is unrealistic, and automate the prediction if it is trusted and typically proves to be accurate.

The user can select one of the options. Depending on the selected option, additional operations can be performed. For example, if the user selects the option to override the predicted mapping, the user interactions unit 418 can allow the user to adjust the relevant features and their relevance values. In this case, the changes made by the user can be propagated back to the AI platform 110 as feedback and used to optimize the XAI model and/or trained NN model.

An augmented transaction can be fed back to the transactions unit 408 for further processing. The augmented transaction can include, for example, identifying information for the transaction, the local explanation, and any user responses to the local explanation. In some cases, processing of the augmented transaction at the transactions unit 408 can trigger optimization of the trained NN model.

**Example M-Example Local Explanation**

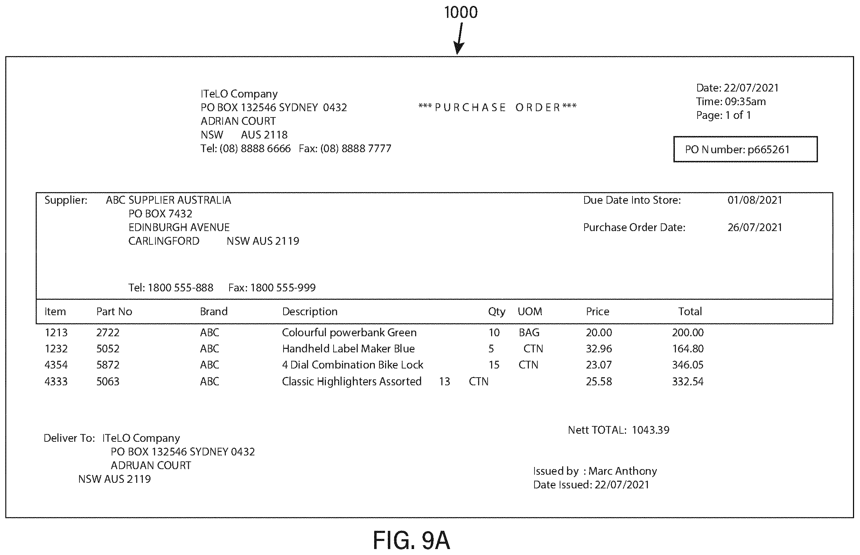

FIG. 9A shows a test image 1000 containing input data for a trained neural network model. The test image is an example of unstructured data, i.e., data not in a defined or structured format. In the example, the test image is an image of a purchase order document. In the example, the neural network model has been trained to identify fields and data in purchase order documents, which can have varying formats and information. The neural network model identifies regions of an image containing fields and data and predict class labels for the regions with a probability. A practical use of the trained neural network model can be to extract data from a purchase order document and store the data in a database for use by other processes.

In one example, the test image can have n channels based on a color model. For example, a grayscale image has one channel, an RGB image has three channels, and a CMYK image has four channels. The test image with n channels can be represented as a high-dimensional vector/high-dimensional matrix or tensor/2D matrix with n channels. The dimensions of an input vector for a test image with n channels will be $X * Y * n$, where X is the width of the image (which can be measured in pixels), Y is the height of the image (which can be measured in pixels), and n is the number of channels.

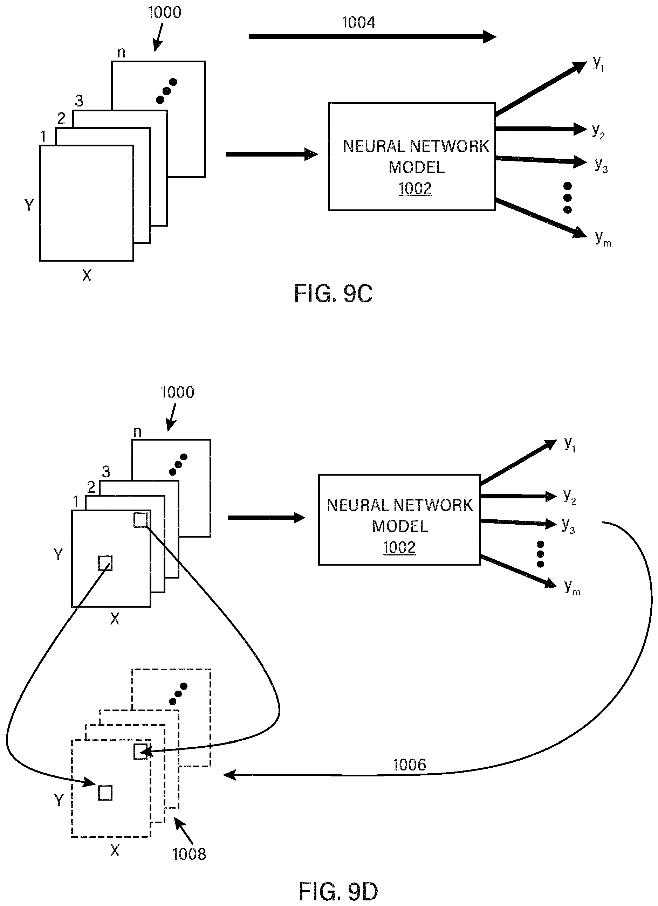

For illustrative purposes, FIG. 9C shows a test image 1000 with n channels fed to an input of a trained neural network model 1002. In one example, in the forward path, as indicated by arrow 1004, the neural network model 1002 can accept one test image 1000 and generate one or more predictions $y_1$, $y_2$, $y_3$, ..., $y_m$ (m can correspond to the number of fields of interest in the document represented by the test image 1000). In another example, the trained neural network model 1002 can accept multiple test images (as a batch job) and generate one or more predictions for each test image.

Each prediction made by the neural network model has a prediction probability, which can be outputted directly by the neural network model or calculated from the output of the neural network model using Equations (1a), (1b), (2a), and (2b) in Example D. For local explainability calculations, the prediction probability is used to compute an output relevance score that is then traversed/propagated in reverse direction to obtain relevance scores at the first hidden layer of the neural network model 1002, as illustrated by arrow 1006 in FIG. 9D (for clarity, FIG. 9D shows the relevance propagation below the neural network model 1002; however, as previously described, the relevance scores are calculated while traversing through the network layers in a reverse direction).

The relevance scores calculated at the first hidden layer of the neural network model will be in the form of a high dimensional vector/high dimensional matrix or tensor and can be called a relevance map (shown at 1008 in FIG. 9D). In one example, the relevance map 1008 can have the same dimensions as that of the input vector 1008, which means that there will be a 1-1 correspondence between the relevance scores in the relevance map 1008 and the pixels/features in the input vector, as illustrated in FIG. 9D.

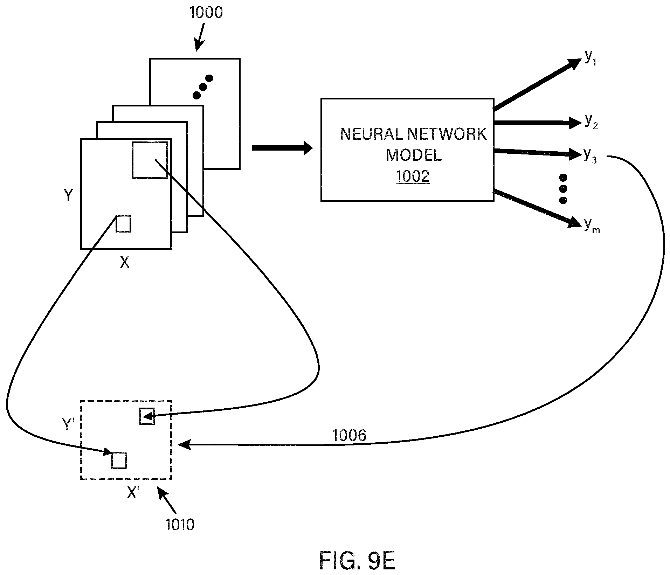

In another example, the relevance map can have different dimensions compared to the input vector 1000, requiring an additional mapping technique between the relevance map and the input vector 1000. For example, as illustrated in FIG. 9E, the relevance map 1010 can have a dimension $X' * Y'$ for the input vector 1000 having a dimension $X * Y * n$, where n is the number of channels. In this case, an additional technique will be needed to map from $X' * Y'$ to $X * Y * n$.

For local explainability, relevance maps are calculated for each output/prediction of the network. Hence, for an input image document, if there are $\theta$ number of outputs/predictions made by the network, then $\theta$ number of relevance maps will be generated for local explainability. Each field of interest in the document can have a corresponding network prediction and relevance map.

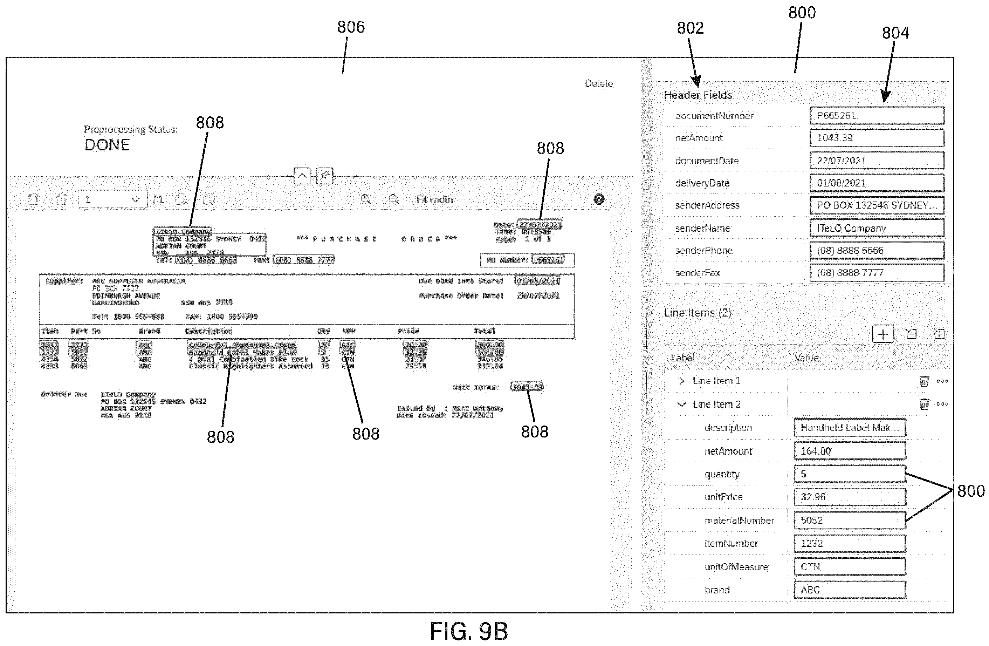

The output of the neural network model can be class labels and the likelihood that certain regions correspond to the class labels. FIG. 9B shows a user interface illustrating an output of the neural network using the test image of FIG. 9A as input. In the right area 800 of the user interface are fields of interest 802 and the data 804 found by the neural network model corresponding to these fields. In the left area 806 of the user interface is the test image of FIG. 9A. Overlaid on the test image are bounding boxes 808 indicating the regions (or a group of pixels) of the test image where the neural network model found data corresponding to the fields of interest. The bounding boxes 808 can be color coded (e.g., by relevance, importance, or to differentiate/group data/fields together).

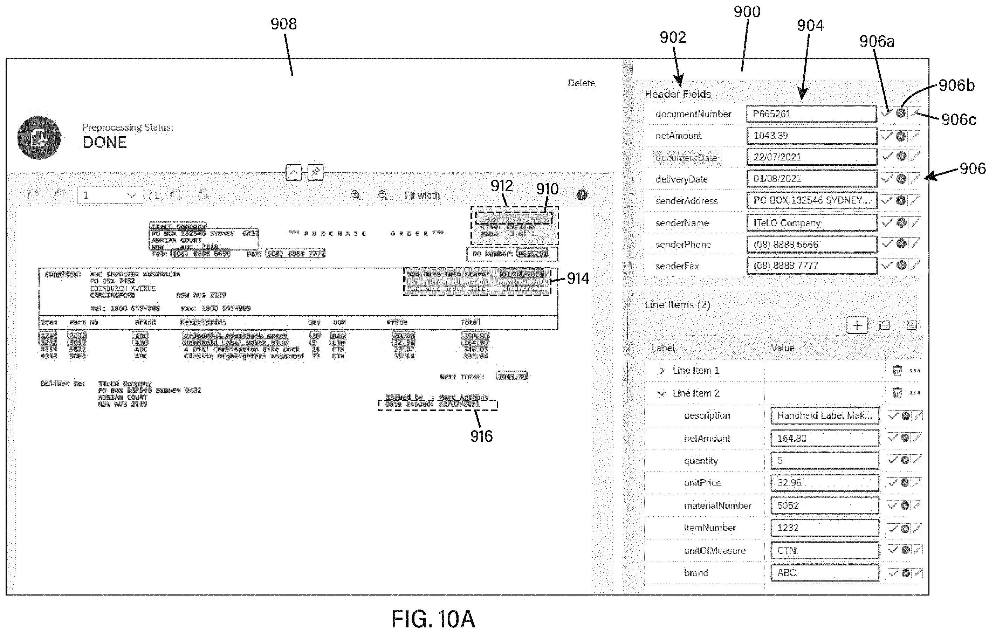

A local explainability dataset can be generated for the neural network model prediction of FIG. 9B using technologies described herein. A local explanation based on the local explainability dataset can be presented to a user. FIGS. 10A-10C show various states of an example user interface presenting explanation of the prediction of the neural network model. The user interface allows user interaction with the prediction (e.g., to accept the prediction, reject the prediction, or edit the prediction). The results of the interaction can be used to adjust/retrain the neural network model in some cases.

In FIG. 10A, in the right region 900 of the user interface are fields of interest 902 and the data 904 found by the neural network model corresponding to these fields. Also shown in the right region 900 is a set of icons 906 that can be used to interact with the prediction of the neural network model. For example, the check mark icon 906a can be used to accept the data found by the neural network model for a particular field, the cross icon 906b can be used to reject the data found by the neural network model for a particular field, and the pencil icon 906c can be used to edit the data found by the neural network. The user interface can have other icons not specifically shown.

In the left region 908 of the user interface of FIG. 10A is the test image of FIG. 9A. Overlaid on the test image are bounding boxes (groups of pixels). The bounding boxes have associated relevance scores that indicate the relevance of the regions of the image within the bounding boxes to the predictions of the network. In the example shown in FIG. 10A, the prediction for the "documentDate" field is shown. Bounding boxes 910, 912, 914 indicate the regions of the test image where the neural network model found data that might correspond to the documentDate. The bounding boxes 910, 912, 914 can be color-coded or otherwise distinguished to indicate the importance or relevance of the indicated regions of the image to the network prediction. In some cases, relevance scores can be displayed by positioning a cursor on the bounding boxes.

In the example, the region identified by the bounding box 910 has a relevance score of 90% for documentDate, the region identified by bounding box 912 has a relevance score of 8% for documentDate, and the region identified by bounding box 914 has a relevance score of 1.9% for documentDate. The region identified by bounding box 910, with the highest relevance score, can be considered to be the most important area or relevant area for documentDate.

The neural network model can use various information to locate the region containing the documentDate. For example, the neural network model can use information such as pixels representing the text "Date", learned image segments, and location information and associated pixels representing similar text patterns to identify the documentDate. One goal of the local explanation is to discover what information the neural network model might be using to locate the region containing the documentDate. For example, even though there are several regions of the document with date information, the neural network model has favored the area closer to the right top corner of the image as the most likely location of the documentDate.

In one example, a user can select a field on the region 900 of the user interface, and the corresponding prediction of the neural network model and explanation of the prediction for the field can be shown on the region 908 of the user interface. For example, the bounding boxes and any corresponding color coding for the relevant areas of the region 908 can be shown. Using the set of icons 906, a user can indicate whether the prediction of the neural network model as shown on the region 908 of the user interface is correct. For example, bounding box 910 has a relevance score of 90% and correctly identifies the region of the image containing the documentDate. In this case, the user can use the check mark icon 906a to indicate that the prediction is correct. If it turns out that the prediction is not correct (e.g., if the region identified by bounding box 916, which also contains a date, had been identified with a higher relevance score than the region identified by bounding box 910 for documentDate), the user can use the cross icon 906b to delete the prediction. On the other hand, if the neural network model identifies the correct region of the image containing the documentDate but is not capturing all the data, the pencil icon 906c can be used to adjust the data and the explanations bounding box along with providing an option to provide a new value for the relevance score associated with the bounding box.

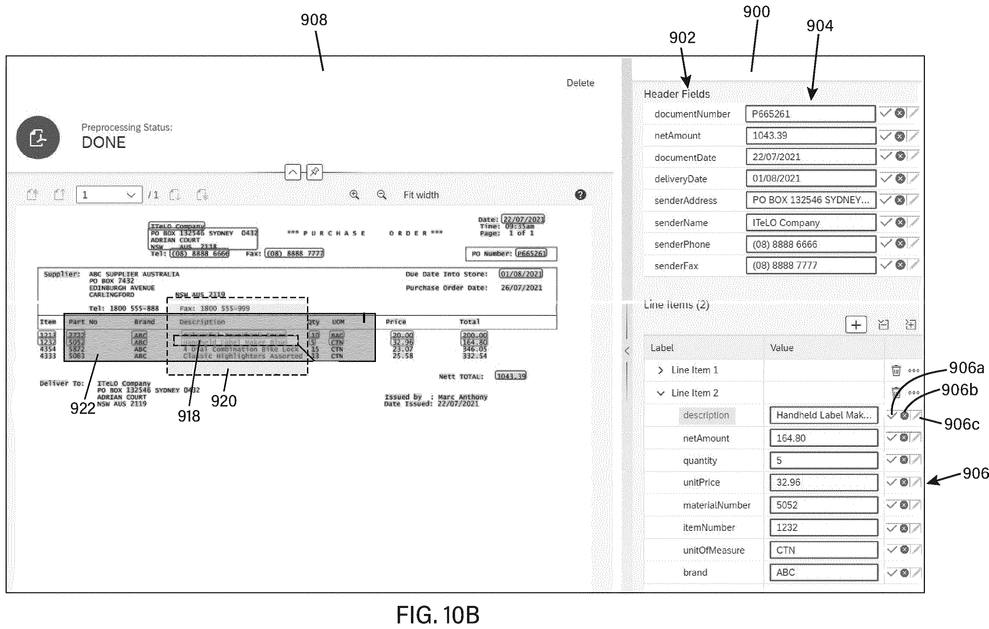

FIG. 10B illustrates another state of the user interface where the prediction of the neural network model for "description" field of a line item is shown. Bounding boxes 918, 920, 922 indicate the regions of the test image where the neural network model found data that might correspond to the description. For example, the region identified by bounding box 918 has a relevance score of 88%, the region identified by bounding box 920 has a relevance score of 7%, and the region identified by bounding box 922 has a relevance score of 4%. A user can observe whether the local explanations are correct (e.g., whether the region with the highest relevance score corresponds to the description). The set of icons 906 can be used to accept the prediction, reject the prediction, or change the values. In one example, the bounding boxes 918, 920, and 922 can be resized or repositioned to indicate the regions of the image containing the desired data. Any interactions with the explanation and prediction (e.g., through the set of icons 906 and bounding boxes 918, 920, 922) can be transmitted to the transactions unit, as previously described.

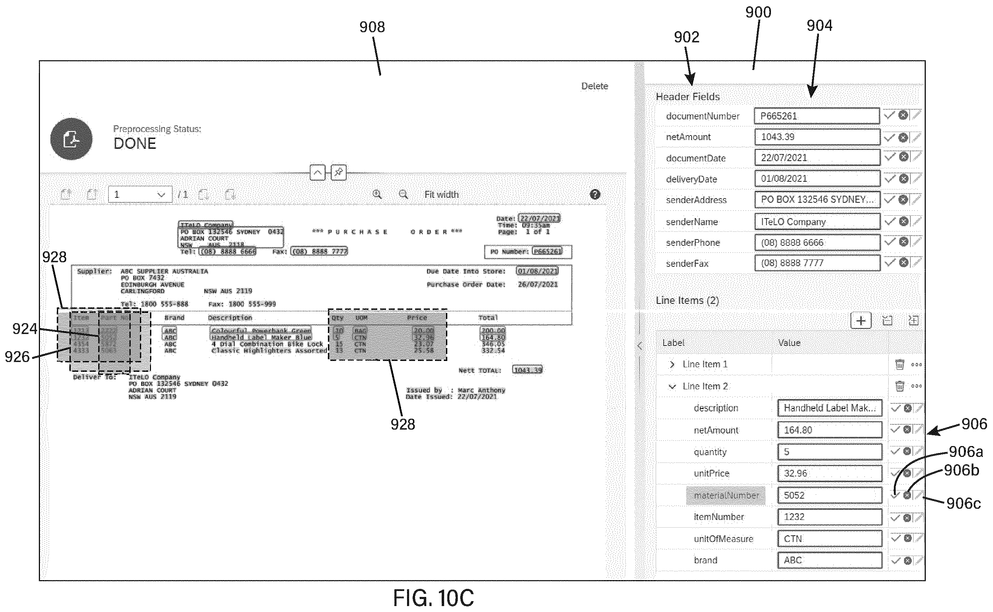

FIG. 10C illustrates another state of the user interface where the prediction of the neural network model for "materialNumber" field of a line item is shown. Bounding boxes (or color-coded boxes) 924, 926, and 928 indicate the regions of the test image where the neural network model found data that might correspond to materialNumber. For example, the region identified by the bounding box 924 has a relevance score of 87% for the materialNumber, the region identified by the bounding box 926 has a relevance score of 7% for the materialNumber, and the regions identified by the bounding boxes 928 have a relevance score of 5%. A user can observe whether the local explanations are correct (e.g., whether the region with the highest relevance score contains the materialNumber). The set of icons 906 can be used to accept, reject, or edit the prediction of the materialNumber field.

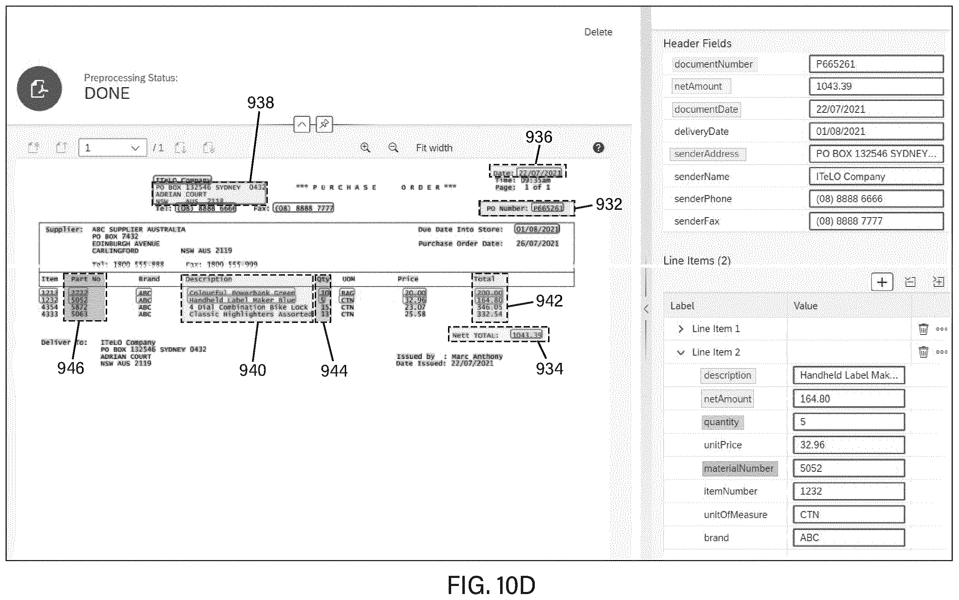

FIG. 10D illustrates another state of the user interface where the predictions of the neural network model for several fields (e.g., documentNumber, netAmount, documentDate, senderAddress, description (line item), netAmount (line item), quantity (line item), and materialNumber (line item)) are shown. In the example, the bounding boxes 932, 934, 936, 938, 940, 942, 946 identify the regions of the image corresponding to the documentNumber, netAmount, documentDate, senderAddress, description (line item), netAmount (line item), quantity (line item), and materialNumber (line item) fields, respectively. The bounding boxes can correspond to the most important (highly relevant/highest value of relevance scores) areas of the image found for the fields. For example, for the documentDate field, compared bounding box 936 in FIG. 10D to the bounding box 910 in FIG. 10A.

Color coding can be used to indicate the importance or relevance of the regions within the bounding boxes 932, 934, 936, 938, 940, 942, 946 to the network prediction for the test image. In some cases, two or more areas of the image (i.e., two or more bounding boxes) can have equal relevance to the prediction of the neural network model. For example, in FIG. 10D, the regions within the bounding boxes 934, 936, corresponding to documentDate and netAmount, respectively, have equal relevance to the network prediction for the test image.

Thus, in any of the examples herein, the technologies can be applied to the use case of identifying fields in documents. In general, these can be any kind of documents (e.g., purchase orders, sales orders, service orders, invoices, receipts, bank formulas, to name a few). In the example, field names appearing in an image are used to identify database field names of data fields in a document. An explanation can be presented (e.g., which text led to a prediction that a particular data field is to be stored in a predicted field name of a table) to help a reviewing user determine whether the prediction (e.g., that a particular data field is to be stored in a predicted field name of a table) has a correct basis. If not, the user can easily see the incorrect basis and take steps to correct the basis.

**Example Computing Systems**

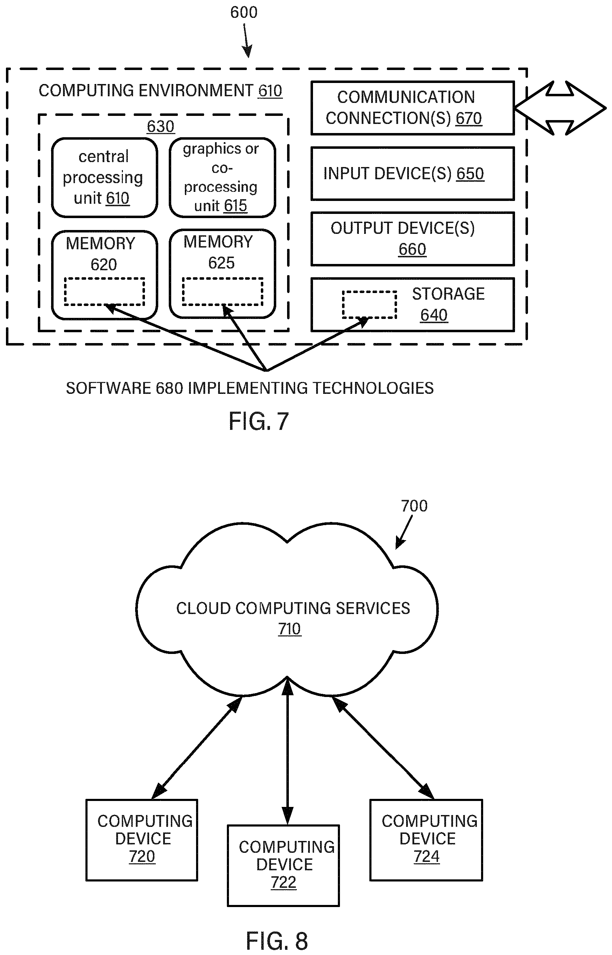

FIG. 7 depicts an example of a suitable computing system 600 in which the described innovations can be implemented. The computing system 600 is not intended to suggest any limitation as to scope of use or functionality of the present disclosure, as the innovations can be implemented in diverse computing systems.

With reference to FIG. 7, the computing system 600 includes one or more processing units 610, 615 and memory 620, 625. In FIG. 7, this basic configuration 630 is included within a dashed line. The processing units 610, 615 execute computer-executable instructions, such as for implementing the features described in the examples herein. A processing unit can be a general-purpose central processing unit (CPU), processor in an application-specific integrated circuit (ASIC), graphics processing unit (GPU), tensor processing unit (TPU), quantum processor, or any other type of processor. In a multi-processing system, multiple processing units execute computer-executable instructions to increase processing power. For example, FIG. 7 shows a central processing unit 610 as well as a graphics processing unit or co-processing unit 615. The tangible memory 620, 625 can be volatile memory (e.g., registers, cache, RAM), non-volatile memory (e.g., ROM, EEPROM, flash memory, etc.), or some combination of the two, accessible by the processing unit(s) 610, 615. The memory 620, 625 stores software 680 implementing one or more innovations described herein, in the form of computer-executable instructions suitable for execution by the processing unit(s) 610, 615.

A computing system 600 can have additional features. For example, the computing system 600 includes storage 640, one or more input devices 650, one or more output devices 660, and one or more communication connections 670, including input devices, output devices, and communication connections for interacting with a user. An interconnection mechanism (not shown) such as a bus, controller, or network interconnects the components of the computing system 600. Typically, operating system software (not shown) provides an operating environment for other software executing in the computing system 600, and coordinates activities of the components of the computing system 600.

The tangible storage 640 can be removable or non-removable, and includes magnetic disks, magnetic tapes or cassettes, CD-ROMs, DVDs, or any other medium which can be used to store information in a non-transitory way and which can be accessed within the computing system 600. The storage 640 stores instructions for the software 680 implementing one or more innovations described herein.

The input device(s) 650 can be an input device such as a keyboard, mouse, pen, or trackball, a voice input device, a scanning device, touch device (e.g., touchpad, display, or the like) or another device that provides input to the computing system 600. The output device(s) 660 can be a display, printer, speaker, CD-writer, or another device that provides output from the computing system 600, e.g., actuators or some mechanical devices like motors, 3D printers, and the like.

The communication connection(s) 670 enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

The innovations can be described in the context of computer-executable instructions, such as those included in program modules, being executed in a computing system on a target real or virtual processor (e.g., which is ultimately executed on one or more hardware processors). Generally, program modules or components include routines, programs, libraries, objects, classes, components, data structures, etc. that perform particular tasks or implement particular abstract data types. The functionality of the program modules can be combined or split between program modules as desired in various embodiments. Computer-executable instructions for program modules can be executed within a local or distributed computing system.

For the sake of presentation, the detailed description uses terms like "determine" and "use" to describe computer operations in a computing system. These terms are high-level descriptions for operations performed by a computer and should not be confused with acts performed by a human being. The actual computer operations corresponding to these terms vary depending on implementation.

**Computer-Readable Media**

Any of the computer-readable media herein can be non-transitory (e.g., volatile memory such as DRAM or SRAM, nonvolatile memory such as magnetic storage, optical storage, or the like) and/or tangible. Any of the storing actions described herein can be implemented by storing in one or more computer-readable media (e.g., computer-readable storage media or other tangible media). Any of the things (e.g., data created and used during implementation) described as stored can be stored in one or more computer-readable media (e.g., computer-readable storage media or other tangible media). Computer-readable media can be limited to implementations not consisting of a signal.

Any of the methods described herein can be implemented by computer-executable instructions in (e.g., stored on, encoded on, or the like) one or more computer-readable media (e.g., computer-readable storage media or other tangible media) or one or more computer-readable storage devices (e.g., memory, magnetic storage, optical storage, or the like). Such instructions can cause a computing system to perform the method. The technologies described herein can be implemented in a variety of programming languages.

**Example Cloud Computing Environment**

FIG. 8 depicts an example cloud computing environment 700 in which the described technologies can be implemented, including, e.g., the systems described herein. The cloud computing environment 700 comprises cloud computing services 710. The cloud computing services 710 can comprise various types of cloud computing resources, such as computer servers, data storage repositories, networking resources, etc. The cloud computing services 710 can be centrally located (e.g., provided by a data center of a business or organization) or distributed (e.g., provided by various computing resources located at different locations, such as different data centers and/or located in different cities or countries).

The cloud computing services 710 are utilized by various types of computing devices (e.g., client computing devices), such as computing devices 720, 722, and 724. For example, the computing devices (e.g., 720, 722, and 724) can be computers (e.g., desktop or laptop computers), mobile devices (e.g., tablet computers or smart phones), or other types of computing devices. For example, the computing devices (e.g., 720, 722, and 724) can utilize the cloud computing services 710 to perform computing operations (e.g., data processing, data storage, and the like).

In practice, cloud-based, on-premises-based, or hybrid scenarios can be supported. dataset comprising the first feature relevance vector; and generating a local explanation of a prediction of the neural network model based on the local explainability dataset.

Example 2. A method according to Example 1, wherein the sequence of layers comprises a plurality of hidden layers and the last layer, wherein the first layer of the sequence of layers is one of the hidden layers, and wherein the input layer is a lower layer preceding the first layer.

Example 3. A method according to any one of Examples 1-2, wherein the network output is a probability of a predicted output of a neuron in the last layer of the sequence of layers.

Example 4. A method according to any one of Examples 1-2, wherein determining the first output relevance score based on the first network output comprises applying a probability function to the first network output to obtain a probability of a predicted output of a neuron in the last layer of the sequence of layers.

Example 5. A method according to any one of Examples 1-4, wherein each first relevance score generated at the last layer is a linear combination of a neuron bias in a lower layer preceding the last layer and a neuron weight in the last layer multiplied by the first output relevance score.

Example 6. A method according to any one of Examples 2-5, wherein reverse propagating the first relevance scores generated at the last layer through the sequence of layers other than the last layer comprises computing for each of the hidden layers a plurality of first relevance scores based on one or more neuron weights in the each of the hidden layers, one or more neuron biases in a lower layer preceding the each of the hidden layers, and one or more first relevance scores computed in a higher layer succeeding the each of the hidden layers.

Example 7. A method according to Example 6, wherein each first relevance score computed at each of the hidden layers is a linear combination of a weighted relevance term and a bias term, wherein the weighted relevance term is based on the neuron weights in the each of the hidden layers and the first relevance scores in the higher layer succeeding the each one of the hidden layers, and wherein the bias term is based on the neuron biases in the lower layer preceding the each one of the hidden layers.

Example 8. A method according to any one of Examples 6-7, further comprising discarding the first relevance scores computed at a higher layer succeeding the each one of the hidden layers after computing the first relevance scores at the each one of the hidden layers.

Example 9. A method according to any one of Examples 2-8, wherein reverse propagating the plurality of first relevance scores generated at the last layer through the sequence of layers other than the last layer comprises computing for each of the hidden layers a plurality of relevance scores without using neuron activations in the hidden layers.

Example 10. A method according to any one of Examples 1-9, wherein the request further identifies a test input dataset comprising a plurality of test input vectors, and wherein feeding the first test input vector comprises selecting the first test input vector from the test input dataset.

Example 11. A method according to Example 10, further comprising selecting a second test input vector having the expected plurality of input features from the test input dataset; feeding the second test input vector to the input layer to generate a second network output from the neural network model; determining a second output relevance score based on the second network output; generating a plurality of second relevance scores at the last layer of the sequence of layers based on the second output relevance score, the neuron weights in the last layer, and the neuron biases in the lower layer preceding the last layer in the sequence of layers; obtaining a plurality of second relevance scores corresponding to the expected plurality of input features at the first layer of the sequence of layers by reverse propagating the second relevance scores obtained at the last layer through the sequence of layers other than the last layer using the neuron weights and the neuron biases; forming a second feature relevance vector based on the second test input vector and the plurality of second relevance scores; and prior to generating the local explanation of the prediction of the neural network model based on the local explainability dataset, adding the second feature relevance vector to the local explainability dataset.

Example 12. A method according to any one of Examples 1-11, wherein feeding the first test input vector having the expected plurality of input features to the input layer generates a plurality of network outputs from the neural network model.

Example 13. A method according to Example 12, further comprising determining a second output relevance score based on a second network output from the plurality of network outputs; generating a plurality of second relevance scores at the last layer of the sequence of layers based on the second output relevance score, the neuron weights in the last layer, and the neuron biases in the lower layer preceding the last layer in the sequence of layers; obtaining a plurality of second relevance scores corresponding to the expected plurality of input features at the first layer of the sequence of layers by reverse propagating the plurality of second relevance scores obtained at the last layer through the sequence of layers other than the last layer using the neuron weights and the neuron biases; forming a second feature relevance vector based on the first test input vector and the plurality of second relevance scores; and prior to generating the local explanation of the prediction of the neural network model based on the local explainability dataset, adding the second feature relevance vector to the local explainability dataset.

Example 14. A method according to any one of Examples 1-13, wherein the neural network model is a trained neural network model, and further comprising retraining the neural network model based at least in part on the local explanation.

Example 15. A method according to any one of Examples 1-13, wherein the neural network model is a trained neural network model, and further comprising receiving an adjustment to the local explanation and retraining the neural network model based at least in part on the adjustment to the local explanation.

Example 16. One or more non-transitory computer-readable storage media storing computer-executable instructions for causing a computer system to perform operations comprising receiving a request identifying a neural network model, wherein the neural network model comprises a plurality of neurons arranged in a sequence of layers, a plurality of neuron weights distributed across the sequence of layers, a plurality of neuron biases distributed across the sequence of layers, and an input layer configured to receive an input vector with a plurality of input features; feeding a test input vector having an expected plurality of input features to the input layer to generate a network output from the neural network model; determining an output relevance score based on the network output; generating a plurality of relevance scores at a last layer of the sequence of layers based on the output relevance score, the neuron weights in the last layer, and the neuron biases in a lower layer preceding the last layer in the sequence of layers; obtaining a plurality of relevance scores corresponding to the expected plurality of input features at a first layer of the sequence of layers by reverse propagating the relevance scores generated at the last layer through the sequence of layers other than the last layer using the neuron weights and the neuron biases; forming a feature relevance vector based on the test input vector and the plurality of relevance scores; generating a local explainability dataset comprising the feature relevance vector; and generating a local explanation of a prediction of the neural network model based on the local explainability dataset.

Example 17. One or more non-transitory computer-readable storage media according to Example 16, wherein the sequence of layers comprises a plurality of hidden layers and the last layer, wherein the first layer of the sequence of layers is one of the hidden layers, and wherein the input layer is a lower layer preceding the first layer, and wherein reverse propagating the first relevance scores through the sequence of layers other than the last layer comprises computing for each of the hidden layers a plurality of relevance scores without using neuron activations in the hidden layers.

Example 18. One or more non-transitory computer-readable storage media according to Example 16, wherein reverse propagating the first relevance scores through the sequence of layers other than the last layer comprises computing for each of the hidden layers a plurality of relevance scores, wherein each relevance score computed at each of the hidden layers is a linear combination of a weighted relevance term and a bias term, wherein the weighted relevance term is based on the neuron weights in the each of the hidden layers and the relevance scores in the higher layer succeeding the each one of the hidden layers, and wherein the bias term is based on the neuron biases in the lower layer preceding the each one of the hidden layers.

Example 19. One or more non-transitory computer-readable storage media according to any one of Examples 16-18, wherein each first relevance score determined at the last layer is a linear combination of a neuron bias in a lower layer preceding the last layer and a product of a neuron weight in the last layer and the output relevance score.

Example 20. A computing system comprising one or more processing units coupled to memory; one or more computer readable storage media storing instructions that when executed cause the computing system to perform operations comprising receiving a request identifying a neural network model, wherein the neural network model comprises a plurality of neurons arranged in a sequence of layers, a plurality of neuron weights distributed across the sequence of layers, a plurality of neuron biases distributed across the sequence of layers, and an input layer

## Example Implementation

Although the operations of some of the disclosed methods are described in a particular, sequential order for convenient presentation, such manner of description encompasses rearrangement, unless a particular ordering is required by specific language set forth herein. For example, operations described sequentially can in some cases be rearranged or performed concurrently.

## Example Alternatives

The technology has been described with a selection of implementations and examples, but these preferred implementations and examples are not to be taken as limiting the scope of the technology since many other implementations and examples are possible that fall within the scope of the disclosed technology. The scope of the disclosed technology includes what is covered by the scope of the following claim.

## Claims

1.  A computer-implemented method for extracting data from an image of a document containing fields and data corresponding to the fields, the method comprising:

    receiving (210) a request identifying a neural network model, wherein the neural network model comprises a plurality of neurons arranged in a sequence of layers, a plurality of neuron weights distributed across the sequence of layers, a plurality of neuron biases distributed across the sequence of layers, and an input layer configured to receive an input vector with a plurality of input features;
    feeding (230) a first test input vector having an expected plurality of input features to the input layer to generate a first network output from the neural network model;
    determining (240) a first output relevance score based on the first network output;
    generating (250) a plurality of first relevance scores at a last layer of the sequence of layers based on the first output relevance score, the neuron weights in the last layer, and the neuron biases in a lower layer preceding the last layer in the sequence of layers;
    obtaining (260) a plurality of first relevance scores corresponding to the expected plurality of input features at a first layer of the sequence of layers by reverse propagating the first relevance scores generated at the last layer through the sequence of layers other than the last layer using the neuron weights and the neuron biases;
    forming (270) a first feature relevance vector based on the first test input vector and the plurality of first relevance scores obtained at the first layer;
    generating (280) a local explainability dataset comprising the first feature relevance vector; and
    generating (290) a local explanation of a prediction of the neural network model based on the local explainability dataset;
    presenting (560) the local explanation to an end user;
    receiving (570) a user response to the local explanation;
    wherein the neural network model is a trained neural network model, and the computer-implemented method further comprises retraining the neural network model based on the user response and at least in part on the local explanation;
    wherein the neural network model is configured to identify regions of the image containing the fields and the data, and to predict class labels for the regions with a probability.

2.  The method of claim 1, wherein the sequence of layers comprises a plurality of hidden layers and the last layer, wherein the first layer of the sequence of layers is one of the hidden layers, and wherein the input layer is a lower layer preceding the first layer.

3. The method of claim 2, wherein the network output is a probability of a predicted output of a neuron in the last layer of the sequence of layers; and/or
wherein determining the first output relevance score based on the first network output comprises applying a probability function to the first network output to obtain a probability of a predicted output of a neuron in the last layer of the sequence of layers.

4. The method of claim 2 or 3, wherein each first relevance score generated at the last layer is a linear combination of a neuron bias in a lower layer preceding the last layer and a neuron weight in the last layer multiplied by the first output relevance score; and/or
wherein reverse propagating the plurality of first relevance scores generated at the last layer through the sequence of layers other than the last layer comprises computing for each of the hidden layers a plurality of first relevance scores without using neuron activations in the hidden layers.

5. The method of any one of claims 2 to 4, wherein reverse propagating the first relevance scores generated at the last layer through the sequence of layers other than the last layer comprises computing for each one of the hidden layers a plurality of first relevance scores based on one or more neuron weights in the each one of the hidden layers, one or more neuron biases in a lower layer preceding the each one of the hidden layers, and one or more first relevance scores computed in a higher layer succeeding the each one of the hidden layers.

6. The method of claim 5, wherein each first relevance score computed at each one of the hidden layers is a linear combination of a weighted relevance term and a bias term, wherein the weighted relevance term is based on the neuron weights in the each one of the hidden layers and the first relevance scores in the higher layer succeeding the each one of the hidden layers, and wherein the bias term is based on the neuron biases in the lower layer preceding the each one of the hidden layers; and/or
further comprising discarding the first relevance scores computed at a higher layer succeeding the each one of the hidden layers after computing the first relevance scores at the each one of the hidden layers.

7. The method of any one of claims 1 to 6, wherein the request further identifies a test input dataset comprising a plurality of test input vectors, and wherein feeding the first test input vector comprises selecting the first test input vector from the test input dataset.

8. The method of claim 7, further comprising:

    selecting a second test input vector having the expected plurality of input features from the test input dataset;
    feeding the second test input vector to the input layer to generate a second network output from the neural network model;
    determining a second output relevance score based on the second network output;
    generating a plurality of second relevance scores at the last layer of the sequence of layers based on the second output relevance score, the neuron weights in the last layer, and the neuron biases in the lower layer preceding the last layer in the sequence of layers;
    obtaining a plurality of second relevance scores corresponding to the expected plurality of input features at the first layer of the sequence of layers by reverse propagating the second relevance scores generated at the last layer through the sequence of layers other than the last layer using the neuron weights and the neuron biases;
    forming a second feature relevance vector based on the second test input vector and the plurality of second relevance scores obtained at the first layer; and
    prior to generating the local explanation of the prediction of the neural network model based on the local explainability dataset, adding the second feature relevance vector to the local explainability dataset.

9. The method of any one of claims 1 to 8, wherein feeding the first test input vector having the expected plurality of input features to the input layer generates a plurality of network outputs from the neural network model.

10. The method of claim 9, further comprising:

    determining a second output relevance score based on a second network output from the plurality of network outputs;
    generating a plurality of second relevance terms at the last layer of the sequence of layers based on the second output relevance score, the neuron weights in the last layer, and the neuron biases in the lower layer preceding the last layer in the sequence of layers;

obtaining a plurality of second relevance scores corresponding to the expected plurality of input features at the first layer of the sequence of layers by reverse propagating the plurality of second relevance terms through the sequence of layers other than the last layer using the neuron weights and the neuron biases;

forming a second feature relevance vector based on the first test input vector and the plurality of second relevance scores; and

prior to generating the local explanation of the prediction of the neural network model based on the local explainability dataset, adding the second feature relevance vector to the local explainability dataset.

11. The method of any one of claims 1 to 10,
    wherein the neural network model is a trained neural network model, and further comprising receiving an adjustment to the local explanation and retraining the neural network model based at least in part on the adjustment to the local explanation.

12. One or more non-transitory computer-readable storage media storing computer-executable instructions for causing a computer system to perform operations for extracting data from an image of a document containing fields and data corresponding to the fields, the operations comprising:

    receiving (210) a request identifying a neural network model, wherein the neural network model comprises a plurality of neurons arranged in a sequence of layers, a plurality of neuron weights distributed across the sequence of layers, a plurality of neuron biases distributed across the sequence of layers, and an input layer configured to receive an input vector with a plurality of input features, and wherein the neural network model is a trained neural network model;

    feeding (230) a test input vector having an expected plurality of input features to the input layer to generate a network output from the neural network model;

    determining (240) an output relevance score based on the network output;

    generating (250) a plurality of relevance scores at a last layer of the sequence of layers based on the output relevance score, the neuron weights in the last layer, and the neuron biases in a lower layer preceding the last layer in the sequence of layers;

    obtaining (260) a plurality of relevance scores corresponding to the expected plurality of input features at a first layer of the sequence of layers by reverse propagating the relevance scores generated at the last layer through the sequence of layers other than the last layer using the neuron weights and the neuron biases;

    forming (270) a feature relevance vector based on the test input vector and the plurality of relevance scores;

    generating (280) a local explainability dataset comprising the feature relevance vector;

    generating (290) a local explanation of a prediction of the neural network model based on the local explainability dataset;

    presenting (560) the local explanation to an end user;

    receiving (570) a user response to the local explanation; and

    retraining the neural network model based on the user response and at least in part on the local explanation;
    wherein the neural network model is configured to identify regions of the image containing the fields and the data, and to predict class labels for the regions with a probability.

13. The one or more non-transitory computer-readable storage media of claim 12, wherein the sequence of layers comprises a plurality of hidden layers and the last layer, wherein the first layer of the sequence of layers is one of the hidden layers, and wherein the input layer is a lower layer preceding the first layer, and wherein reverse propagating the first relevance scores through the sequence of layers other than the last layer comprises computing for each of the hidden layers a plurality of relevance scores without using neuron activations in the hidden layers.

14. The one or more non-transitory computer-readable storage media of claim 12 or 13, wherein reverse propagating the first relevance scores through the sequence of layers other than the last layer comprises computing for each of the hidden layers a plurality of relevance scores, wherein each relevance score computed at each of the hidden layers is a linear combination of a weighted relevance term and a bias term, wherein the weighted relevance term is based on the neuron weights in the each of the hidden layers and the relevance scores in the higher layer succeeding the each one of the hidden layers, and wherein the bias term is based on the neuron biases in the lower layer preceding the each one of the hidden layers; and/or
    wherein each first relevance score determined at the last layer is a linear combination of a neuron bias in a lower layer preceding the last layer and a product of a neuron weight in the last layer and the output relevance score.

**15.** A computing system comprising:

one or more processing units coupled to memory; and
one or more computer readable storage media storing instructions that when executed cause the computing system to perform operations for extracting data from an image of a document containing fields and data corresponding to the fields, the operations comprising:

receiving (210) a request identifying a neural network model, wherein the neural network model comprises a plurality of neurons arranged in a sequence of layers, a plurality of neuron weights distributed across the sequence of layers, a plurality of neuron biases distributed across the sequence of layers, and an input layer configured to receive an input vector with a plurality of input features, and wherein the neural network model is a trained neural network model;

feeding (230) a test input vector having an expected plurality of input features to the input layer to generate a network output from the neural network model;

determining (240) an output relevance score based on the network output;

generating (250) a plurality of relevance scores at a last layer of the sequence of layers based on the output relevance score, the neuron weights in the last layer, and the neuron biases in a lower layer preceding the last layer in the sequence of layers;

obtaining (260) a plurality of relevance scores corresponding to the expected plurality of input features at a first layer of the sequence of layers by reverse propagating the relevance scores generated at the last layer through the sequence of layers other than the last layer without using neuron activations in the sequence of layers;

forming (270) a feature relevance vector based on the test input vector and the plurality of relevance scores;

generating (280) a local explainability dataset comprising the feature relevance vector;

generating (290) a local explanation of a prediction of the neural network model based on the local explainability dataset;

presenting (560) the local explanation to an end user;

receiving (570) a user response to the local explanation; and

retraining the neural network model based on the user response and at least in part on the local explanation;

wherein the neural network model is configured to identify regions of the image containing the fields and the data, and to predict class labels for the regions with a probability.

## Patentansprüche

**1.** Computerimplementiertes Verfahren zum Extrahieren von Daten von einem Bild eines Dokuments, das Felder und Daten entsprechend den Feldern enthält, wobei das Verfahren umfasst:

Empfangen (210) einer Anfrage, die ein neuronales Netzwerkmodell identifiziert, wobei das neuronale Netzwerkmodell eine Mehrzahl von Neuronen, die in einer Abfolge von Schichten angeordnet sind, eine Mehrzahl von Neurongewichtungen, die über die Abfolge von Schichten verteilt sind, eine Mehrzahl von Neuron-Biases, die über die Abfolge von Schichten verteilt sind, und eine Eingabeschicht, die zum Empfangen eines Eingabevektors mit einer Mehrzahl von Eingabemerkmalen ausgebildet ist, umfasst;

Zuführen (230) eines ersten Prüfeingabevektors mit einer erwarteten Mehrzahl von Eingabemerkmalen zu der Eingabeschicht zum Erzeugen einer ersten Netzwerkausgabe von dem neuronalen Netzwerkmodell;

Bestimmen (240) eines ersten Ausgaberelevanzwerts auf der Basis der ersten Netzwerkausgabe;

Erzeugen (250) einer Mehrzahl von ersten Relevanzwerten bei einer letzten Schicht der Abfolge von Schichten auf der Basis des ersten Ausgaberelevanzwerts, der Neurongewichtungen in der letzten Schicht und der Neuron-Biases in einer unteren Schicht, die der letzten Schicht in der Abfolge von Schichten vorangeht;

Erhalten (260) einer Mehrzahl von ersten Relevanzwerten entsprechend der erwarteten Mehrzahl von Eingabemerkmalen bei einer ersten Schicht der Abfolge von Schichten durch invertiertes Ausbreiten der ersten Relevanzwerte, die bei der letzten Schicht durch die Abfolge von Schichten, die von der letzten Schicht verschieden sind, unter Verwendung der Neurongewichtungen und der Neuron-Biases erzeugt worden sind;

Bilden (270) eines ersten Merkmalrelevanzvektors auf der Basis des ersten Prüfeingabevektors und der Mehrzahl von ersten Relevanzwerten, die bei der ersten Schicht erhalten worden sind;

Erzeugen (280) eines lokalen Erklärbarkeitsdatensatzes, der den ersten Merkmalrelevanzvektor umfasst; und

Erzeugen (290) einer lokalen Erklärung einer Vorhersage des neuronalen Netzwerkmodells auf der Basis des lokalen Erklärbarkeitsdatensatzes;

Präsentieren (560) der lokalen Erklärung für einen Endbenutzer;
Empfangen (570) einer Benutzerantwort auf die lokale Erklärung;
wobei das neuronale Netzwerkmodell ein trainiertes neuronales Netzwerkmodell ist und das computerimplementierte Verfahren ferner das erneute Trainieren des neuronalen Netzwerkmodells auf der Basis der Benutzerantwort und mindestens teilweise der lokalen Erklärung umfasst;
wobei das neuronale Netzwerkmodell zum Identifizieren von Bereichen des Bilds, das die Felder und die Daten enthält, und zum Vorhersagen von Klassenbezeichnungen für die Bereiche mit einer Wahrscheinlichkeit ausgebildet ist.

2. Verfahren nach Anspruch 1, wobei die Abfolge von Schichten eine Mehrzahl von verborgenen Schichten und die letzte Schicht umfasst, wobei die erste Schicht der Abfolge von Schichten eine der verborgenen Schichten ist, und wobei die Eingabeschicht eine untere Schicht ist, die der ersten Schicht vorangeht.

3. Verfahren nach Anspruch 2, wobei die Netzwerkausgabe eine Wahrscheinlichkeit einer vorhergesagten Ausgabe eines Neurons in der letzten Schicht der Abfolge von Schichten ist; und/oder
wobei das Bestimmen des ersten Ausgaberelevanzwerts auf der Basis der ersten Netzwerkausgabe das Anwenden einer Wahrscheinlichkeitsfunktion auf die erste Netzwerkausgabe zum Erhalten einer Wahrscheinlichkeit einer vorhergesagten Ausgabe eines Neurons in der letzten Schicht der Abfolge von Schichten umfasst.

4. Verfahren nach Anspruch 2 oder 3, wobei jeder erste Relevanzwert, der bei der letzten Schicht erzeugt wird, eine lineare Kombination aus einem Neuron-Bias in einer unteren Schicht, die der letzten Schicht vorangeht, und einer Neurongewichtung in der letzten Schicht, die durch den ersten Ausgaberelevanzwert multipliziert wird, ist; und/oder
wobei das invertierte Ausbreiten der Mehrzahl von ersten Relevanzwerten, die bei der letzten Schicht erzeugt worden sind, durch die Abfolge von Schichten, die von der letzten Schicht verschieden sind, das Berechnen, für jede der verborgenen Schichten, einer Mehrzahl von ersten Relevanzwerten ohne Verwenden von Neuronaktivierungen in den verborgenen Schichten umfasst.

5. Verfahren nach einem der Ansprüche 2 bis 4, wobei das invertierte Ausbreiten der ersten Relevanzwerte, die bei der letzten Schicht erzeugt worden sind, durch die Abfolge von Schichten, die von der letzten Schicht verschieden sind, das Berechnen, für jede der verborgenen Schichten, einer Mehrzahl von ersten Relevanzwerten auf der Basis einer oder mehrerer Neurongewichtung(en) in jeder der verborgenen Schichten, eines oder mehrerer Neuron-Bias(es) in einer unteren Schicht, die jeder der verborgenen Schichten vorangeht, und eines ersten Relevanzwerts oder mehrerer erster Relevanzwerte, der/die in einer höheren Schicht berechnet wird/werden, die jeder der verborgenen Schichten nachfolgt, umfasst.

6. Verfahren nach Anspruch 5, wobei jeder erste Relevanzwert, der bei jeder der verborgenen Schichten berechnet wird, eine lineare Kombination aus einem gewichteten Relevanzterm und einem Bias-Term ist, wobei der gewichtete Relevanzterm auf den Neurongewichtungen in jeder der verborgenen Schichten und den ersten Relevanzwerten in der höheren Schicht, die jeder der verborgenen Schichten nachfolgt, basiert, und wobei der Bias-Term auf den Neuron-Biases in der unteren Schicht, die jeder der verborgenen Schichten vorangeht, basiert; und/oder
ferner umfassend das Verwerfen der ersten Relevanzwerte, die bei einer höheren Schicht berechnet werden, die jeder der verborgenen Schichten nachfolgt, nach dem Berechnen der ersten Relevanzwerte bei jeder der verborgenen Schichten.

7. Verfahren nach einem der Ansprüche 1 bis 6, wobei die Anfrage ferner einen Prüfeingabedatensatz identifiziert, der eine Mehrzahl von Prüfeingabevektoren umfasst, und wobei das Zuführen des ersten Prüfeingabevektors das Auswählen des ersten Prüfeingabevektors von dem Prüfeingabedatensatz umfasst.

8. Verfahren nach Anspruch 7, ferner umfassend:

Auswählen eines zweiten Prüfeingabevektors, der die erwartete Mehrzahl von Eingabemerkmalen von dem Prüfeingabedatensatz aufweist;
Zuführen des zweiten Prüfeingabevektors zu der Eingabeschicht zum Erzeugen einer zweiten Netzwerkausgabe von dem neuronalen Netzwerkmodell;
Bestimmen eines zweiten Ausgaberelevanzwerts auf der Basis der zweiten Netzwerkausgabe;
Erzeugen einer Mehrzahl von zweiten Relevanzwerten bei der letzten Schicht der Abfolge von Schichten auf der Basis des zweiten Ausgaberelevanzwerts, der Neurongewichtungen in der letzten Schicht und der Neuron-Biases in der unteren Schicht, die der letzten Schicht in der Abfolge von Schichten vorangeht;

Erhalten einer Mehrzahl von zweiten Relevanzwerten entsprechend der erwarteten Mehrzahl von Eingabemerkmalen bei der ersten Schicht der Abfolge von Schichten durch invertiertes Ausbreiten der zweiten Relevanzwerte, die bei der letzten Schicht erzeugt worden sind, durch die Abfolge von Schichten, die von der letzten Schicht verschieden sind, unter Verwendung der Neurongewichtungen und der Neuron-Biases;

Bilden eines zweiten Merkmalrelevanzvektors auf der Basis des zweiten Prüfeingabevektors und der Mehrzahl von zweiten Relevanzwerten, die bei der ersten Schicht erhalten worden sind; und

vor dem Erzeugen der lokalen Erklärung der Vorhersage des neuronalen Netzwerkmodells auf der Basis des lokalen Erklärbarkeitsdatensatzes, Hinzufügen des zweiten Merkmalrelevanzvektors zu dem lokalen Erklärbarkeitsdatensatz.

9. Verfahren nach einem der Ansprüche 1 bis 8, wobei das Zuführen des ersten Prüfeingabevektors, der die erwartete Mehrzahl von Eingabemerkmalen aufweist, zu der Eingabeschicht eine Mehrzahl von Netzwerkausgaben von dem neuronalen Netzwerkmodell erzeugt.

10. Verfahren nach Anspruch 9, ferner umfassend:

Bestimmen eines zweiten Ausgaberelevanzwerts auf der Basis einer zweiten Netzwerkausgabe von der Mehrzahl von Netzwerkausgaben;

Erzeugen einer Mehrzahl von zweiten Relevanztermen bei der letzten Schicht der Abfolge von Schichten auf der Basis des zweiten Ausgaberelevanzwerts, der Neurongewichtungen in der letzten Schicht und der Neuron-Biase in der unteren Schicht, die der letzten Schicht in der Abfolge von Schichten vorangeht;

Erhalten einer Mehrzahl von zweiten Relevanzwerten entsprechend der erwarteten Mehrzahl von Eingabemerkmalen bei der ersten Schicht der Abfolge von Schichten durch invertiertes Ausbreiten der Mehrzahl von zweiten Relevanztermen durch die Abfolge von Schichten, die von der letzten Schicht verschieden sind, unter Verwendung der Neurongewichtungen und der Neuron-Biases;

Bilden eines zweiten Merkmalrelevanzvektors auf der Basis des ersten Prüfeingabevektors und der Mehrzahl von zweiten Relevanzwerten; und

vor dem Erzeugen der lokalen Erklärung der Vorhersage des neuronalen Netzwerkmodells auf der Basis des lokalen Erklärbarkeitsdatensatzes, Hinzufügen des zweiten Merkmalrelevanzvektors zu dem lokalen Erklärbarkeitsdatensatz.

11. Verfahren nach einem der Ansprüche 1 bis 10,
wobei das neuronale Netzwerkmodell ein trainiertes neuronales Netzwerkmodell ist, und ferner umfassend das Empfangen einer Einstellung zu der lokalen Erklärung und das erneute Trainieren des neuronalen Netzwerkmodells mindestens teilweise auf der Basis der Einstellung zu der lokalen Erklärung.

12. Ein oder mehrere nicht-flüchtige(s) computerlesbare(s) Speichermedium/medien, das/die computerausführbare Anweisungen zum Bewirken speichert/speichern, dass ein Computersystem Vorgänge zum Extrahieren von Daten von einem Bild eines Dokuments, das Felder und Daten entsprechend den Feldern enthält, durchführt, wobei die Vorgänge umfassen:

Empfangen (210) einer Anfrage, die ein neuronales Netzwerkmodell identifiziert, wobei das neuronale Netzwerkmodell eine Mehrzahl von Neuronen, die in einer Abfolge von Schichten angeordnet sind, eine Mehrzahl von Neurongewichtungen, die über die Abfolge von Schichten verteilt sind, eine Mehrzahl von Neuron-Biases, die über die Abfolge von Schichten verteilt sind, und eine Eingabeschicht, die zum Empfangen eines Eingabevektors mit einer Mehrzahl von Eingabemerkmalen ausgebildet ist, und wobei das neuronale Netzwerkmodell ein trainiertes neuronales Netzwerkmodell ist, umfasst;

Zuführen (230) eines Prüfeingabevektors mit einer erwarteten Mehrzahl von Eingabemerkmalen zu der Eingabeschicht zum Erzeugen einer Netzwerkausgabe von dem neuronalen Netzwerkmodell;

Bestimmen (240) eines Ausgaberelevanzwerts auf der Basis der Netzwerkausgabe;

Erzeugen (250) einer Mehrzahl von Relevanzwerten bei einer letzten Schicht der Abfolge von Schichten auf der Basis des Ausgaberelevanzwerts, der Neurongewichtungen in der letzten Schicht und der Neuron-Biases in einer unteren Schicht, die der letzten Schicht in der Abfolge von Schichten vorangeht;

Erhalten (260) einer Mehrzahl von Relevanzwerten entsprechend der erwarteten Mehrzahl von Eingabemerkmalen bei einer ersten Schicht der Abfolge von Schichten durch invertiertes Ausbreiten der Relevanzwerte, die bei der letzten Schicht durch die Abfolge von Schichten, die von der letzten Schicht verschieden sind, unter Verwendung der Neurongewichtungen und der Neuron-Biases erzeugt worden sind;

Bilden (270) eines Merkmalrelevanzvektors auf der Basis des Prüfeingabevektors und der Mehrzahl von Relevanzwerten;

Erzeugen (280) eines lokalen Erklärbarkeitsdatensatzes, der den Merkmalrelevanzvektor umfasst;

Erzeugen (290) einer lokalen Erklärung einer Vorhersage des neuronalen Netzwerkmodells auf der Basis des lokalen Erklärbarkeitsdatensatzes;

Präsentieren (560) der lokalen Erklärung für einen Endbenutzer;

Empfangen (570) einer Benutzerantwort auf die lokale Erklärung; und

erneutes Trainieren des neuronalen Netzwerkmodells auf der Basis der Benutzerantwort und mindestens teilweise der lokalen Erklärung;

wobei das neuronale Netzwerkmodell zum Identifizieren von Bereichen des Bilds, das die Felder und die Daten enthält, und zum Vorhersagen von Klassenbezeichnungen für die Bereiche mit einer Wahrscheinlichkeit ausgebildet ist.

13. Ein oder mehrere nicht-flüchtige(s) computerlesbare(s) Speichermedium/medien nach Anspruch 12, wobei die Abfolge von Schichten eine Mehrzahl von verborgenen Schichten und die letzte Schicht umfasst, wobei die erste Schicht der Abfolge von Schichten eine der verborgenen Schichten ist, und wobei die Eingabeschicht eine untere Schicht ist, die der ersten Schicht vorangeht, und wobei das invertierte Ausbreiten der ersten Relevanzwerte durch die Abfolge von Schichten, die von der letzten Schicht verschieden sind, das Berechnen einer Mehrzahl von Relevanzwerten ohne Verwenden von Neuronaktivierungen in den verborgenen Schichten für jede der verborgenen Schichten umfasst.

14. Ein oder mehrere nicht-flüchtige(s) computerlesbare(s) Speichermedium/medien nach Anspruch 12 oder 13, wobei das invertierte Ausbreiten der ersten Relevanzwerte durch die Abfolge von Schichten, die von der letzten Schicht verschieden sind, das Berechnen einer Mehrzahl von Relevanzwerten für jede der verborgenen Schichten umfasst, wobei jeder Relevanzwert, der bei jeder der verborgenen Schichten berechnet wird, eine lineare Kombination aus einem gewichteten Relevanzterm und einem Bias-Term ist, wobei der gewichtete Relevanzterm auf den Neurongewichtungen in jeder der verborgenen Schichten und den Relevanzwerten in der höheren Schicht, die jeder der verborgenen Schichten nachfolgt, basiert, und wobei der Bias-Term auf den Neuron-Biases in der unteren Schicht, die jeder der verborgenen Schichten vorangeht, basiert; und/oder

wobei jeder erste Relevanzwert, der bei der letzten Schicht bestimmt wird, eine lineare Kombination eines Neuron-Bias in einer unteren Schicht, die der letzten Schicht vorangeht, und eines Produkts einer Neurongewichtung in der letzten Schicht und des Ausgaberelevanzwerts ist.

15. Rechensystem, umfassend:

eine oder mehrere Verarbeitungseinheit(en), die mit einem Speicher gekoppelt ist/sind; und

ein oder mehrere computerlesbare(s) Speichermedium/medien, das/die Anweisungen speichert/speichern, die, wenn sie ausgeführt werden, bewirken, dass das Rechensystem Vorgänge zum Extrahieren von Daten von einem Bild eines Dokuments durchgeführt, das Felder und Daten entsprechend den Feldern enthält, wobei die Vorgänge umfassen:

Empfangen (210) einer Anfrage, die ein neuronales Netzwerkmodell identifiziert, wobei das neuronale Netzwerkmodell eine Mehrzahl von Neuronen, die in einer Abfolge von Schichten angeordnet sind, eine Mehrzahl von Neurongewichtungen, die über die Abfolge von Schichten verteilt sind, eine Mehrzahl von Neuron-Biases, die über die Abfolge von Schichten verteilt sind, und eine Eingabeschicht, die zum Empfangen eines Eingabevektors mit einer Mehrzahl von Eingabemerkmalen ausgebildet ist, umfasst, und wobei das neuronale Netzwerkmodell ein trainiertes neuronales Netzwerkmodell ist;

Zuführen (230) eines Prüfeingabevektors mit einer erwarteten Mehrzahl von Eingabemerkmalen zu der Eingabeschicht zum Erzeugen einer Netzwerkausgabe von dem neuronalen Netzwerkmodell;

Bestimmen (240) eines Ausgaberelevanzwerts auf der Basis der Netzwerkausgabe;

Erzeugen (250) einer Mehrzahl von Relevanzwerten bei einer letzten Schicht der Abfolge von Schichten auf der Basis des Ausgaberelevanzwerts, der Neurongewichtungen in der letzten Schicht und der Neuron-Biases in einer unteren Schicht, die der letzten Schicht in der Abfolge von Schichten vorangeht;

Erhalten (260) einer Mehrzahl von Relevanzwerten entsprechend der erwarteten Mehrzahl von Eingabemerkmalen bei einer ersten Schicht der Abfolge von Schichten durch invertiertes Ausbreiten der Relevanzwerte, die bei der letzten Schicht durch die Abfolge von Schichten, die von der letzten Schicht verschieden sind, unter Verwendung der Neurongewichtungen und der Neuron-Biases erzeugt worden sind;

Bilden (270) eines ersten Merkmalrelevanzvektors auf der Basis des Prüfeingabevektors und der Mehrzahl von Relevanzwerten;

Erzeugen (280) eines lokalen Erklärbarkeitsdatensatzes, der den Merkmalrelevanzvektor umfasst;

Erzeugen (290) einer lokalen Erklärung einer Vorhersage des neuronalen Netzwerkmodells auf der Basis des lokalen Erklärbarkeitsdatensatzes;

Präsentieren (560) der lokalen Erklärung für einen Endbenutzer;

Empfangen (570) einer Benutzerantwort auf die lokale Erklärung; und

erneutes Trainieren des neuronalen Netzwerkmodells auf der Basis der Benutzerantwort und mindestens teilweise der lokalen Erklärung;

wobei das neuronale Netzwerkmodell zum Identifizieren von Bereichen des Bilds, das die Felder und die Daten enthält, und zum Vorhersagen von Klassenbezeichnungen für die Bereiche mit einer Wahrscheinlichkeit ausgebildet ist.

## Revendications

1. Un procédé mis en œuvre par ordinateur pour extraire des données à partir d'une image d'un document contenant des champs et des données correspondant aux champs, le procédé comprenant le fait de :

recevoir (210) une requête identifiant un modèle de réseau de neurones, sachant que le modèle de réseau de neurones comprend une pluralité de neurones agencés dans une séquence de couches, une pluralité de poids neuronaux répartis sur la séquence de couches, une pluralité de biais neuronaux répartis sur la séquence de couches, et une couche d'entrée configurée pour recevoir un vecteur d'entrée comportant une pluralité de caractéristiques d'entrée ;

fournir (230) à la couche d'entrée un premier vecteur d'entrée de test présentant une pluralité attendue de caractéristiques d'entrée afin de générer une première sortie de réseau à partir du modèle de réseau de neurones ;

déterminer (240) un premier score de pertinence de sortie sur la base de la première sortie de réseau ;

générer (250) une pluralité de premiers scores de pertinence au niveau d'une dernière couche de la séquence de couches sur la base du premier score de pertinence de sortie, des poids neuronaux dans la dernière couche et des biais neuronaux dans une couche inférieure précédant la dernière couche dans la séquence de couches ;

obtenir (260) une pluralité de premiers scores de pertinence correspondant à la pluralité attendue de caractéristiques d'entrée au niveau d'une première couche de la séquence de couches en propageant inversement les premiers scores de pertinence générés au niveau de la dernière couche à travers la séquence de couches autre que la dernière couche à l'aide des poids neuronaux et des biais neuronaux ;

former (270) un premier vecteur de pertinence de caractéristique sur la base du premier vecteur d'entrée de test et de la pluralité de premiers scores de pertinence obtenus au niveau de la première couche ;

générer (280) un ensemble de données d'explicabilité locale comprenant le premier vecteur de pertinence de caractéristique ; et de

générer (290) une explication locale d'une prédiction du modèle de réseau de neurones sur la base de l'ensemble de données d'explicabilité locale ;

présenter (560) l'explication locale à un utilisateur final ;

recevoir (570) une réponse de l'utilisateur à l'explication locale ;

sachant que le modèle de réseau de neurones est un modèle de réseau de neurones entraîné, et que le procédé mis en œuvre par ordinateur comprend en outre le fait de réentraîner le modèle de réseau de neurones sur la base de la réponse de l'utilisateur et au moins en partie sur la base de l'explication locale ;

sachant que le modèle de réseau de neurones est configuré pour identifier des régions de l'image contenant les champs et les données, et pour prédire des étiquettes de classe pour les régions avec une probabilité.

2. Le procédé d'après la revendication 1, sachant que la séquence de couches comprend une pluralité de couches cachées et la dernière couche, sachant que la première couche de la séquence de couches est l'une des couches cachées, et sachant que la couche d'entrée est une couche inférieure précédant la première couche.

3. Le procédé d'après la revendication 2, dans lequel la sortie de réseau est une probabilité d'une sortie prédite d'un neurone dans la dernière couche de la séquence de couches ; et/ou

sachant que le fait de déterminer le premier score de pertinence de sortie sur la base de la première sortie de réseau comprend le fait d'appliquer une fonction de probabilité à la première sortie de réseau afin d'obtenir une probabilité d'une sortie prédite d'un neurone dans la dernière couche de la séquence de couches.

4. Le procédé d'après la revendication 2 ou 3, sachant que chaque premier score de pertinence généré au niveau de la dernière couche est une combinaison linéaire d'un biais neuronal dans une couche inférieure précédant la dernière couche et d'un poids neuronal dans la dernière couche multiplié par le premier score de pertinence de sortie ; et/ou sachant que la propagation inverse de la pluralité de premiers scores de pertinence générés au niveau de la dernière couche à travers la séquence de couches autre que la dernière couche comprend le calcul, pour chacune des couches cachées, d'une pluralité de premiers scores de pertinence sans utiliser des activations neuronales dans les couches cachées.

5. Le procédé d'après l'une quelconque des revendications de 2 à 4, sachant que la propagation inverse des premiers scores de pertinence générés au niveau de la dernière couche à travers la séquence de couches autres que la dernière couche comprend le calcul, pour chacune des couches cachées, d'une pluralité de premiers scores de pertinence sur la base d'un ou de plusieurs poids neuronaux dans chacune des couches cachées, d'un ou de plusieurs biais neuronaux dans une couche inférieure précédant chacune des couches cachées, et d'un ou de plusieurs premiers scores de pertinence calculés dans une couche supérieure succédant à chacune des couches cachées.

6. Le procédé d'après la revendication 5, sachant que chaque premier score de pertinence calculé au niveau de chacune des couches cachées est une combinaison linéaire d'un terme de pertinence pondéré et d'un terme de biais, sachant que le terme de pertinence pondéré est basé sur les poids neuronaux dans chacune des couches cachées et les premiers scores de pertinence dans la couche supérieure succédant à chacune des couches cachées, et sachant que le terme de biais est basé sur les biais neuronaux dans la couche inférieure précédant chacune des couches cachées ; et/ou
comprenant en outre le fait d'éliminer les premiers scores de pertinence calculés au niveau d'une couche supérieure succédant à chacune des couches cachées après avoir calculé les premiers scores de pertinence au niveau de chacune des couches cachées.

7. Le procédé d'après l'une quelconque des revendications de 1 à 6, sachant que la requête identifie en outre un ensemble de données d'entrée de test comprenant une pluralité de vecteurs d'entrée de test, et sachant que le fait de fournir le premier vecteur d'entrée de test comprend la sélection du premier vecteur d'entrée de test à partir de l'ensemble de données d'entrée de test.

8. Le procédé d'après la revendication 7, comprenant en outre le fait de :

sélectionner à partir de l'ensemble de données d'entrée de test un deuxième vecteur d'entrée de test présentant la pluralité attendue de caractéristiques d'entrée ;
fournir le deuxième vecteur d'entrée de test à la couche d'entrée pour générer une deuxième sortie de réseau à partir du modèle de réseau de neurones ;
déterminer un deuxième score de pertinence de sortie sur la base de la deuxième sortie de réseau ;
générer une pluralité de deuxièmes scores de pertinence au niveau de la dernière couche de la séquence de couches sur la base du deuxième score de pertinence de sortie, des poids neuronaux dans la dernière couche et des biais neuronaux dans la couche inférieure précédant la dernière couche dans la séquence de couches ;
obtenir une pluralité de deuxièmes scores de pertinence correspondant à la pluralité attendue de caractéristiques d'entrée au niveau de la première couche de la séquence de couches en propageant inversement les deuxièmes scores de pertinence générés au niveau de la dernière couche à travers la séquence de couches autre que la dernière couche à l'aide des poids neuronaux et des biais neuronaux ;
former un deuxième vecteur de pertinence de caractéristique sur la base du deuxième vecteur d'entrée de test et de la pluralité de deuxièmes scores de pertinence obtenus au niveau de la première couche ; et de
avant de générer l'explication locale de la prédiction du modèle de réseau de neurones sur la base de l'ensemble de données d'explicabilité locale, ajouter le deuxième vecteur de pertinence de caractéristique à l'ensemble de données d'explicabilité locale.

9. Le procédé d'après l'une quelconque des revendications de 1 à 8, sachant que le fait de fournir à la couche d'entrée le premier vecteur d'entrée de test présentant la pluralité attendue de caractéristiques d'entrée génère une pluralité de sorties de réseau à partir du modèle de réseau de neurones.

10. Le procédé d'après la revendication 9, comprenant en outre le fait de :

déterminer un deuxième score de pertinence de sortie sur la base d'une deuxième sortie de réseau parmi la pluralité de sorties de réseau ;

générer une pluralité de deuxièmes termes de pertinence au niveau de la dernière couche de la séquence de couches sur la base du deuxième score de pertinence de sortie, des poids neuronaux dans la dernière couche et des biais neuronaux dans la couche inférieure précédant la dernière couche dans la séquence de couches ;
obtenir une pluralité de deuxièmes scores de pertinence correspondant à la pluralité attendue de caractéristiques d'entrée au niveau de la première couche de la séquence de couches en propageant inversement la pluralité de deuxièmes termes de pertinence à travers la séquence de couches autre que la dernière couche à l'aide des poids neuronaux et des biais neuronaux ;
former un deuxième vecteur de pertinence de caractéristique sur la base du premier vecteur d'entrée de test et de la pluralité de deuxièmes scores de pertinence ; et de
avant de générer l'explication locale de la prédiction du modèle de réseau de neurones sur la base de l'ensemble de données d'explicabilité locale, ajouter le deuxième vecteur de pertinence de caractéristique à l'ensemble de données d'explicabilité locale.

11. Le procédé d'après l'une quelconque des revendications de 1 à 10,
sachant que le modèle de réseau de neurones est un modèle de réseau de neurones entraîné, et comprenant en outre la réception d'un ajustement de l'explication locale et le réentraînement du modèle de réseau de neurones sur la base, au moins en partie, de l'ajustement de l'explication locale.

12. Un ou plusieurs supports de stockage non transitoires lisibles par ordinateur stockant des instructions exécutables par ordinateur pour amener un système informatique à effectuer des opérations afin d'extraire des données d'une image d'un document contenant des champs et des données correspondant aux champs, les opérations comprenant le fait de :

recevoir (210) une requête identifiant un modèle de réseau de neurones, sachant que le modèle de réseau de neurones comprend une pluralité de neurones agencés dans une séquence de couches, une pluralité de poids neuronaux répartis sur la séquence de couches, une pluralité de biais neuronaux répartis sur la séquence de couches, et une couche d'entrée configurée pour recevoir un vecteur d'entrée comportant une pluralité de caractéristiques d'entrée, et sachant que le modèle de réseau de neurones est un modèle de réseau de neurones entraîné ;
fournir (230) à la couche d'entrée un premier vecteur d'entrée de test présentant une pluralité attendue de caractéristiques d'entrée afin de générer une sortie de réseau à partir du modèle de réseau de neurones ;
déterminer (240) un score de pertinence de sortie sur la base de la sortie de réseau ;
générer (250) une pluralité de scores de pertinence au niveau d'une dernière couche de la séquence de couches sur la base du score de pertinence de sortie, des poids neuronaux dans la dernière couche et des biais neuronaux dans une couche inférieure précédant la dernière couche dans la séquence de couches ;
obtenir (260) une pluralité de scores de pertinence correspondant à la pluralité attendue de caractéristiques d'entrée au niveau d'une première couche de la séquence de couches en propageant inversement les scores de pertinence générés au niveau de la dernière couche à travers la séquence de couches autre que la dernière couche à l'aide des poids neuronaux et des biais neuronaux ;
former (270) un vecteur de pertinence de caractéristique sur la base du vecteur d'entrée de test et de la pluralité de scores de pertinence ;
générer (280) un ensemble de données d'explicabilité locale comprenant le vecteur de pertinence de caractéristique ;
générer (290) une explication locale d'une prédiction du modèle de réseau de neurones sur la base de l'ensemble de données d'explicabilité locale ;
présenter (560) l'explication locale à un utilisateur final ;
recevoir (570) une réponse de l'utilisateur à l'explication locale ;
réentraîner le modèle de réseau de neurones sur la base de la réponse de l'utilisateur et au moins en partie sur la base de l'explication locale ;
sachant que le modèle de réseau de neurones est configuré pour identifier des régions de l'image contenant les champs et les données, et pour prédire des étiquettes de classe pour les régions avec une probabilité.

13. Le ou les supports de stockage non transitoires lisibles par ordinateur d'après la revendication 12, sachant que la séquence de couches comprend une pluralité de couches cachées et la dernière couche, sachant que la première couche de la séquence de couches est l'une des couches cachées, et sachant que la couche d'entrée est une couche inférieure précédant la première couche, sachant que la propagation inverse des premiers scores de pertinence à travers la séquence de couches autre que la dernière couche comprend le calcul, pour chacune des couches cachées, d'une pluralité de premiers scores de pertinence sans utiliser des activations neuronales dans les couches cachées.

14. Le ou les supports de stockage lisibles par ordinateur non transitoires d'après la revendication 12 ou 13, sachant que la propagation inverse des premiers scores de pertinence à travers la séquence de couches autres que la dernière couche comprend le calcul, pour chacune des couches cachées, d'une pluralité de scores de pertinence, sachant que chaque score de pertinence calculé au niveau de chacune des couches cachées est une combinaison linéaire d'un terme de pertinence pondéré et d'un terme de biais, sachant que le terme de pertinence pondéré est basé sur les poids neuronaux dans chacune des couches cachées et les scores de pertinence dans la couche supérieure succédant à chacune des couches cachées, et sachant que le terme de biais est basé sur les biais neuronaux dans la couche inférieure précédant chacune des couches cachées ; et/ou
sachant que chaque premier score de pertinence déterminé au niveau de la dernière couche est une combinaison linéaire d'un biais neuronal dans une couche inférieure précédant la dernière couche et d'un produit d'un poids neuronal dans la dernière couche et du score de pertinence de sortie.

15. Un système informatique comprenant :

une ou plusieurs unités de traitement couplées à une mémoire ; et
un ou plusieurs supports de stockage lisibles par ordinateur stockant des instructions qui, lorsqu'elles sont exécutées, amènent le système informatique à effectuer des opérations pour extraire des données d'une image d'un document contenant des champs et des données correspondant aux champs, les opérations comprenant le fait de :

recevoir (210) une requête identifiant un modèle de réseau de neurones, sachant que le modèle de réseau de neurones comprend une pluralité de neurones agencés dans une séquence de couches, une pluralité de poids neuronaux répartis sur la séquence de couches, une pluralité de biais neuronaux répartis sur la séquence de couches, et une couche d'entrée configurée pour recevoir un vecteur d'entrée comportant une pluralité de caractéristiques d'entrée, et sachant que le modèle de réseau de neurones est un modèle de réseau de neurones entraîné ;
fournir (230) à la couche d'entrée un premier vecteur d'entrée de test présentant une pluralité attendue de caractéristiques d'entrée afin de générer une sortie de réseau à partir du modèle de réseau de neurones ;
déterminer (240) un score de pertinence de sortie sur la base de la sortie de réseau ;
générer (250) une pluralité de scores de pertinence au niveau d'une dernière couche de la séquence de couches sur la base du score de pertinence de sortie, des poids neuronaux dans la dernière couche et des biais neuronaux dans une couche inférieure précédant la dernière couche dans la séquence de couches ;
obtenir (260) une pluralité de scores de pertinence correspondant à la pluralité attendue de caractéristiques d'entrée au niveau d'une première couche de la séquence de couches en propageant inversement les scores de pertinence générés au niveau de la dernière couche à travers la séquence de couches autre que la dernière couche sans utiliser des activations neuronales dans les couches cachées ;
former (270) un vecteur de pertinence de caractéristique sur la base du vecteur d'entrée de test et de la pluralité de scores de pertinence ;
générer (280) un ensemble de données d'explicabilité locale comprenant le vecteur de pertinence de caractéristique ;
générer (290) une explication locale d'une prédiction du modèle de réseau de neurones sur la base de l'ensemble de données d'explicabilité locale ;
présenter (560) l'explication locale à un utilisateur final ;
recevoir (570) une réponse de l'utilisateur à l'explication locale ; et de
réentraîner le modèle de réseau de neurones sur la base de la réponse de l'utilisateur et au moins en partie sur la base de l'explication locale ;
sachant que le modèle de réseau de neurones est configuré pour identifier des régions de l'image contenant les champs et les données, et pour prédire des étiquettes de classe pour les régions avec une probabilité.

100

AI PLATFORM 110

$$\begin{bmatrix} \kappa_1 \\ \kappa_2 \\ \vdots \\ \kappa_m \end{bmatrix}$$

XAI MODEL
130

LOCAL
EXPLAINABILITY
DATASET
140

INTERPRETATIONS
UNIT 160

EXPLANATIONS
UNIT 170

LOCAL
EXPLANATION
150

NEURAL NETWORK
MODEL
120

TEST INPUT
DATASET
125

TEST INPUT
DATASET
125

NEURAL NETWORK
MODEL
120

DATA
STORAGE
180

FIG. 1

200

RECEIVE A REQUEST TO EXPLAIN NEURAL NETWORK MODEL PREDICTION(S) FOR A TEST INPUT DATASET 210

RETRIEVING A TEST INPUT VECTOR FROM THE TEST INPUT DATASET 220

FEED TEST INPUT VECTOR TO THE NEURAL NETWORK MODEL TO OBTAIN NETWORK OUTPUT(S) 230

GENERATE AN OUTPUT RELEVANCE SCORE FOR EACH OUTPUT NEURON OF THE NEURAL NETWORK MODEL 240

GENERATE RELEVANCE TERMS FOR THE LAST LAYER OF THE NEURAL NETWORK MODEL FOR EACH OUTPUT NEURON 250

REVERSE PROPAGATE THE RELEVANCE TERMS FOR THE LAST LAYER THROUGH THE REMAINING LAYERS OF THE NEURAL NETWORK MODEL TO OBTAIN RELEVANCE SCORES 260

ADD THE RELEVANCE SCORES TO A LOCAL EXPLAINABILITY DATASET 270

PROCESS ADDITIONAL TEST INPUT VECTORS? 280

YES

NO

GENERATE A LOCAL EXPLANATION OF THE PREDICTIONS OF THE NEURAL NETWORK MODEL FOR THE TEST INPUT DATASET BASED ON THE LOCAL EXPLAINABILITY DATASET 290

FIG. 2

FIG. 3A

INPUT LAYER
304

FIRST HIDDEN LAYER, L=1
308

SECOND HIDDEN LAYER/
LAST HIDDEN LAYER, L=2
312

LAST LAYER/
OUTPUT LAYER, L=3
316

EP 4 198 836 B1

32

FIG. 3B

FIG. 3C

FIG. 3D

FIG. 3E

FIG. 3F

FIG. 3G

EP 4 198 836 B1

FIG. 4A

FIG. 4B

FIG. 5

500

RECEIVE TRANSACTION IDENTIFYING
A NEURAL NETWORK MODEL AND
A TEST INPUT DATASET
510

OBTAIN THE NEURAL NETWORK MODEL
AND TEST INPUT DATASET
520

PROVIDE THE NEURAL NETWORK MODEL
AND TEST INPUT DATASET TO AN
APPROPRIATE XAI MODEL
530

GENERATE A LOCAL EXPLAINABILITY
DATASET WITH THE XAI MODEL
540

GENERATE A LOCAL EXPLANATION OF
THE NETWORK PREDICTION FOR THE
TEST INPUT DATASET BASED ON THE
LOCAL EXPLAINABILITY DATASET
550

PRESENT THE LOCAL EXPLANATION TO
AN END USER
560

RECEIVE A USER RESPONSE TO
THE LOCAL EXPLANATION
570

OPTIMIZE THE XAI MODEL
AND/OR NEURAL NETWORK
MODEL BASED ON THE
USER RESPONSE
580

FIG. 6

600

COMPUTING ENVIRONMENT 610

630

central processing unit 610

graphics or co-processing unit 615

MEMORY 620

MEMORY 625

COMMUNICATION CONNECTION(S) 670

INPUT DEVICE(S) 650

OUTPUT DEVICE(S) 660

STORAGE 640

SOFTWARE 680 IMPLEMENTING TECHNOLOGIES

FIG. 7

700

CLOUD COMPUTING SERVICES 710

COMPUTING DEVICE 720

COMPUTING DEVICE 722

COMPUTING DEVICE 724

FIG. 8

1000

| | | | | | | | | Date: 22/07/2021 |

ITeLO Company
PO BOX 132546 SYDNEY 0432          ***PURCHASE ORDER***
ADRIAN COURT
NSW     AUS 2118
Tel: (08) 8888 6666   Fax: (08) 8888 7777

Date: 22/07/2021
Time: 09:35am
Page: 1 of 1

PO Number: p665261

| Supplier: | ABC SUPPLIER AUSTRALIA | | Due Date Into Store: | 01/08/2021 |
| | PO BOX 7432 | | | |
| | EDINBURGH AVENUE | | Purchase Order Date: | 26/07/2021 |
| | CARLINGFORD     NSW AUS 2119 | | | |

Tel: 1800 555-888    Fax: 1800 555-999

| Item | Part No | Brand | Description | Qty | UOM | Price | Total |
|------|---------|-------|-------------|-----|-----|-------|-------|
| 1213 | 2722 | ABC | Colourful powerbank Green | 10 | BAG | 20.00 | 200.00 |
| 1232 | 5052 | ABC | Handheld Label Maker Blue | 5 | CTN | 32.96 | 164.80 |
| 4354 | 5872 | ABC | 4 Dial Combination Bike Lock | 15 | CTN | 23.07 | 346.05 |
| 4333 | 5063 | ABC | Classic Highlighters Assorted | 13 | CTN | 25.58 | 332.54 |

Nett TOTAL: 1043.39

Deliver To:  ITeLO Company
             PO BOX 132546 SYDNEY 0432
             ADRUAN COURT
        NSW AUS 2119

Issued by : Marc Anthony
Date Issued: 22/07/2021

FIG. 9A

EP 4 198 836 B1

FIG. 9B

EP 4 198 836 B1

FIG. 9C

FIG. 9D

FIG. 9E

FIG. 10A

EP 4 198 836 B1

FIG. 10B

EP 4 198 836 B1

FIG. 10C

FIG. 10D

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. HUBER et al.** Enhancing Explainability of Deep Reinforcement Learning Through Selective Layer-Wise Relevance Propagation. *KI 2019: Advances in Artificial Intelligence*, 188-202